# EUROPEAN PATENT APPLICATION

(11) **EP 3 345 985 A1**
(43) Date of publication of application: **11.07.2018**
(21) Application number: 18150391.3
(22) Date of filing: 05.01.2018
(51) Int. Cl.: C09K 19/34, C09K 19/04, C09K 19/20, C09K 19/30, C09K 19/12

(54) **LIQUID-CRYSTALLINE MEDIUM**

(30) Priority: 09.01.2017 EP 17150727
(71) Applicant: Merck Patent GmbH, 64293 Darmstadt (DE)
(72) Inventor: Yun, Chang-Jun, HWASEONG-SI, GYEONGGI-DO 18476 (KR); Choi, Chang-Suk, ASAN-SI, CHUNGCHEONGNAM-DO 31575 (KR); Han, Yeon-Jeong, GUNPO-SI, GYEONGGI-DO 15865 (KR); Jin, Heui-Seok, YONGIN-SI, GYEONGGI-DO 16811 (KR); Yun, Yong-Kuk, HWASEONG 18477 (KR)

(57) **Abstract**

The present invention relates to liquid-crystalline media comprising one or more compounds selected from the compounds of formula I 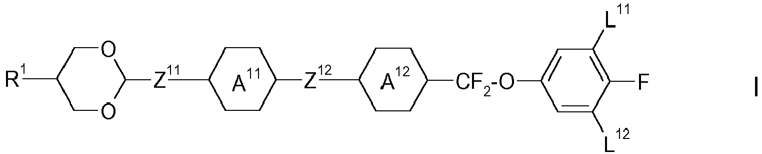 and
a compound of formula CV 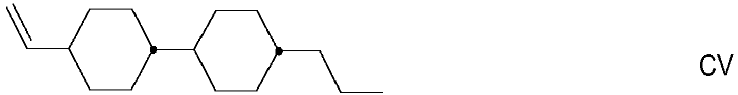 in a concentration of 30 % by weight or less.
and
one or more compounds of formula OT 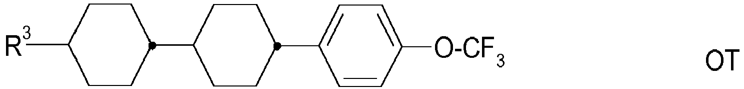 and
a compound of formula CP 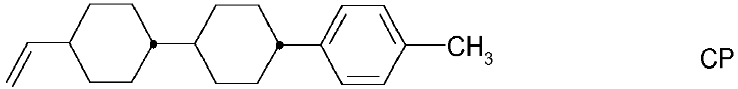 wherein the occurring groups have the meanings given in claim 1, and to liquid-crystal displays containing these media, especially to active-matrix displays and in particular to IPS and FFS displays. The invention further relates to a process for the fabrication of liquid crystal displays using the ODF process.

## Description

The present invention relates to liquid-crystalline media and to liquid-crystal displays containing these media, especially to displays addressed by an active matrix and in particular to displays of the in-plane switching (IPS) or fringe-field switching (FFS) type. The invention further relates to a process for the fabrication of liquid crystal displays.

Liquid-crystal displays (LCDs) are used in many areas for the display of information. LCDs are used both for direct-view displays and for projection-type displays. The electro-optical modes used are, for example, the twisted nematic (TN), super twisted nematic (STN), optically compensated bend (OCB) and electrically controlled birefringence (ECB) modes together with their various modifications, as well as others. All these modes utilise an electric field which is substantially perpendicular to the substrates or the liquid-crystal layer. Besides these modes, there are also electro-optical modes that utilise an electric field which is substantially parallel to the substrates or the liquid-crystal layer, such as, for example, the in-plane switching (IPS) mode (as disclosed, for example, in DE 40 00 451 and EP 0 588 568) and the fringe field switching (FFS) mode, in which a strong "fringe field" is present, i.e. a strong electric field close to the edge of the electrodes and, throughout the cell, an electric field which has both a strong vertical component and a strong horizontal component. These latter two electro-optical modes in particular are used for LCDs in modern desktop monitors and displays for TV sets and multimedia applications. The liquid crystals according to the present invention are preferably used in displays of this type. In general, dielectrically positive liquid-crystalline media having rather lower values of the dielectric anisotropy are used in FFS displays, but in some cases liquid-crystalline media having a dielectric anisotropy of only about 3 or even less are also used in IPS displays.

For these displays, novel liquid-crystalline media having improved properties are required. The addressing times in particular have to be improved for many types of application. Thus, liquid-crystalline media having lower viscosities (η), especially having lower rotational viscosities (γ₁), are required. Besides these viscosity parameters, the media must have a nematic phase range of suitable width and position and an appropriate birefringence (Δn), and the dielectric anisotropy (Δε) should be sufficiently high to allow a reasonably low operating voltage.

The displays according to the present invention are preferably addressed by an active matrix (active matrix LCDs, AMDs for short), preferably by a matrix of thin film transistors (TFTs). However, the liquid crystals according to the invention can also advantageously be used in displays having other known addressing means.

Liquid-crystal compositions which are suitable for LCDs and especially for IPS displays are known, for example, from JP 07-181 439 (A), EP 0 667 555, EP 0 673 986, DE 195 09 410, DE 195 28 106, DE 195 28 107, WO 96/23 851 and WO 96/28 521. However, these compositions have certain disadvantages. Amongst other deficiencies, most of them result in disadvantageously long addressing times, have inadequate values of the resistivity and/or require excessively high operating voltages. In addition, there is a demand for improving the low-temperature behaviour of LCDs. Both an improvement in the operating properties and also in the shelf life are necessary here.

A special problem arises during the manufacture of a display panel. An LCD display is typically produced by adhesively bonding a first substrate having a pixel electrode, a thin-film transistor (TFT) and other components to a second substrate which contains a common electrode, using a sealant. The space enclosed by the substrates is filled with the liquid crystal via a fill opening by means of capillary force or vacuum; the fill opening is subsequently sealed using a sealant. With the increase in the size of liquid-crystal displays in recent years, the so-called "one drop filling" process (ODF process) has been proposed as a process for the mass production of liquid-crystal displays (see, for example, JPS63-179323 and JPH10-239694) in order to shorten the cycle times during production. This is a process for the production of a liquid-crystal display in which one or a plurality of drops of the liquid crystal is applied to the substrate, which is fitted with electrodes and is provided with a sealant round the edges. The second substrate is subsequently mounted in vacuo and the sealant is cured.

However, the one drop filling bears the risk of causing display defects referred to as "ODF mura" or "drop mura" where symmetrical patterns related to the arrangement of the individual drops that had been dispensed in the ODF process remain visible after assembly of the panel. Depending on their size and shape, small circular spots ("dotting mura") or larger, rather square areas (chess pattern mura) can be visible.

Thus, there is a considerable need for liquid-crystalline media having suitable properties for practical applications, such as a broad nematic phase range, suitable optical anisotropy Δn corresponding to the display type used, a high Δε and particularly low viscosities for particularly short response times. In addition, it is important to provide mixture concepts that enable a flexible adaptation of ODF-process relevant parameters in order to avoid display defects such as drop mura.

Surprisingly, it was found that it is possible to achieve liquid-crystalline media having a suitably high Δε, a suitable phase range and Δn which do not exhibit the disadvantages of the materials from the prior art, or at least only do so to a significantly lesser extent, and that allow for a flexible adjustment of the contact angle in order to influence the spreading behaviour of the liquid crystal medium during the ODF process which unexpectedly proved useful for the at least partial or complete avoidance of drop mura.

These improved liquid-crystalline media according to the present invention comprise
one or more compounds selected from the compounds of formula I 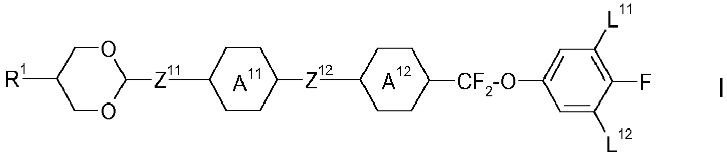 and
a compound of the formula CV 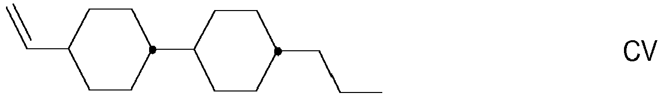 in a concentration of 30 % by weight or less,
and
one or more, preferably one, compound(s) of the formula OT 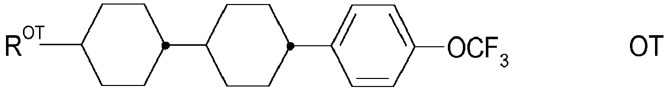 and
a compound of the formula PV 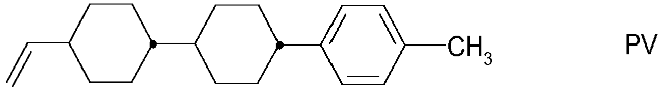 wherein
- R¹: denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, 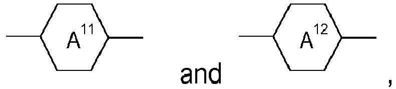
independently of one another, denote 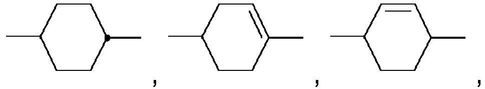 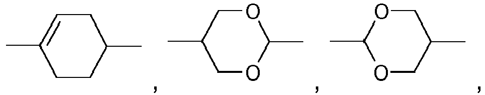 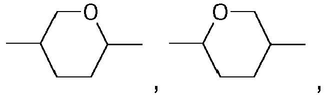 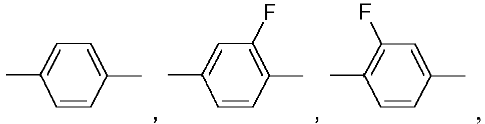 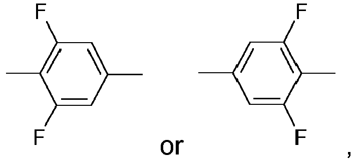
- Z¹¹ and Z¹²: independently of one another, denote -CH₂CH₂-, -CF₂CF₂-, -C(O)O-, trans-CH=CH-, trans-CF=CF-, -C≡C-, -CH₂O-, -CF₂O- or a single bond,
- L¹¹ and L¹²,: independently of one another, denote H, F or Cl,
- R^{OT}: denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, and R² and R³ preferably denote alkyl or alkenyl, preferably alkyl or alkenyl having up to 7 C atoms.

In a preferred embodiment the medium according to the invention further comprises one or more compounds selected from the group of compounds of the formulae IA, IB and IC 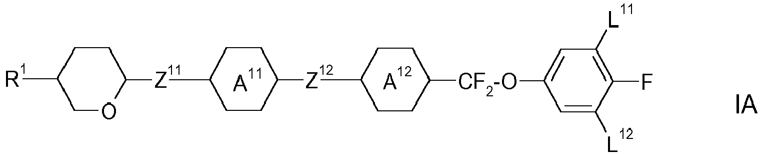 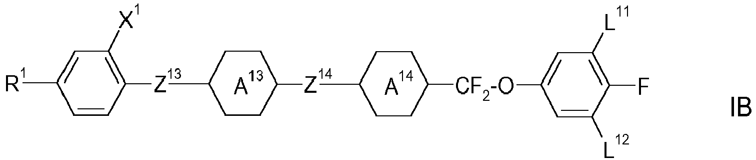 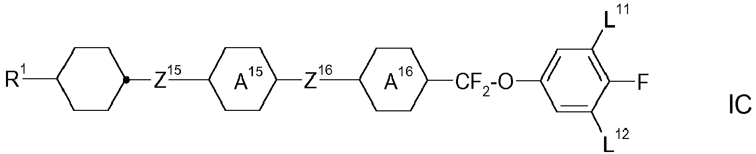 in which R¹, A¹¹, A¹², Z¹¹, Z¹², L¹¹ and L¹² have the meanings given above for formula I and 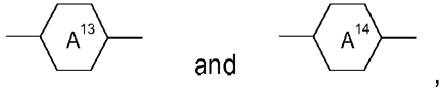 independently of one another, denote 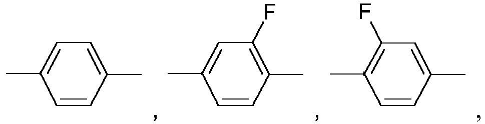 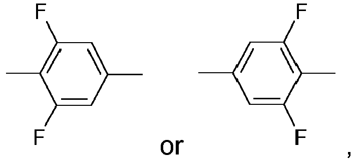 preferably 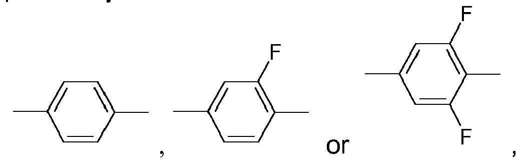 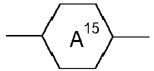 denotes 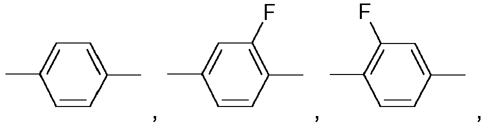 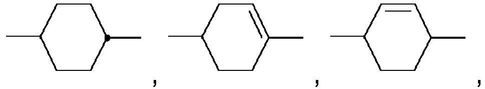 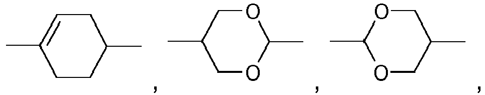 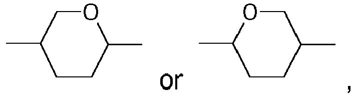 preferably 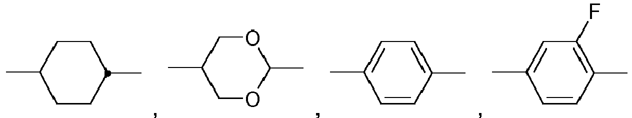 or 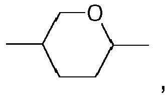 particularly preferably 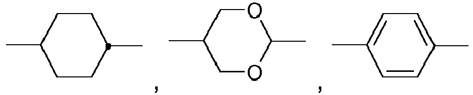 or 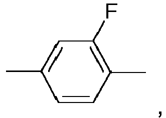 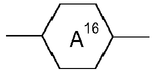 denotes 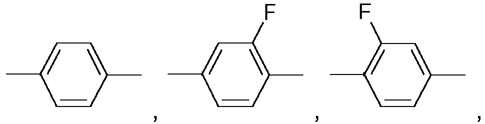 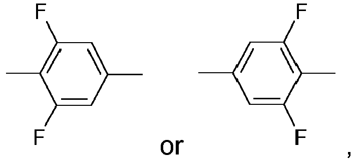 preferably 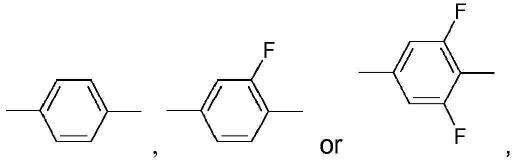
- Z¹³ to Z¹⁶,: independently of one another, denote -CH₂CH₂-, -CF₂CF₂-, -COO-, *trans*-CH=CH-, *trans*-CF=CF-, -C≡C-, -CH₂O-, -CF₂O- or a single bond, preferably-CH₂CH₂-, -C(O)O-, *trans*-CH=CH- or a single bond, particularly preferably -CF₂O- or a single bond and very preferably a single bond,
- X¹: denotes H or F.

In a preferred embodiment of the present invention, the medium comprises one or more compounds selected from the group of the compounds of the formulae II and III: 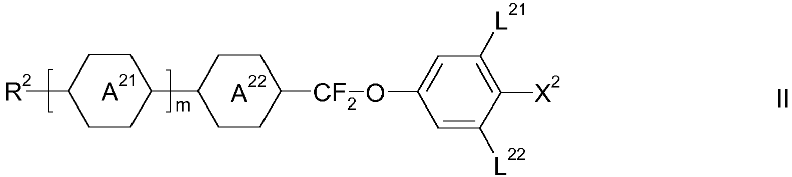 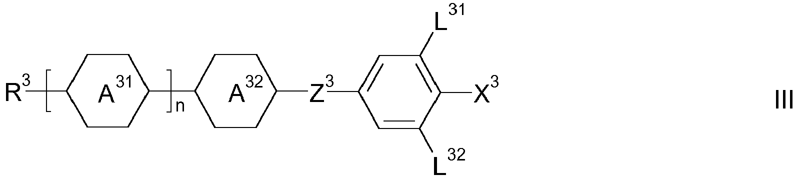 in which
- R² and R³,: independently of one another, denote alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, and R² and R³ preferably denote alkyl or alkenyl, 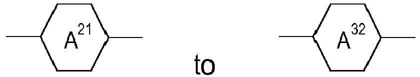 on each occurrence, independently of one another, denote 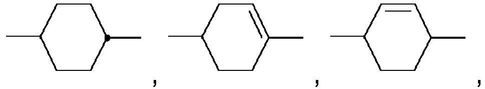 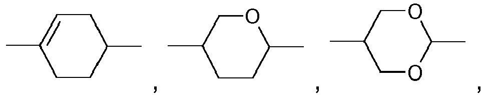 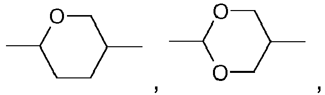 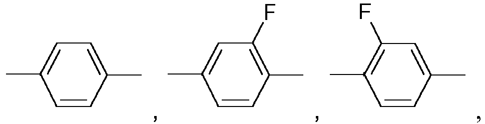 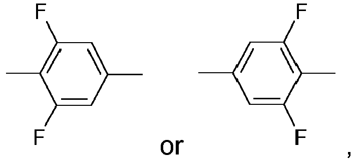
preferably 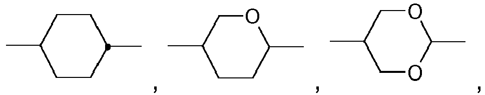 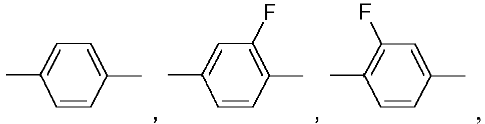 or 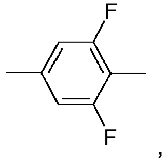
- L²¹, L²², L³¹ and L³²,: independently of one another, denote H or F, L²¹ and/or L³¹ preferably denote F,
- X² and X³,: independently of one another, denote halogen, halo-genated alkyl or alkoxy having 1 to 3 C atoms or halo-genated alkenyl or alkenyloxy having 2 or 3 C atoms, preferably F, Cl, -OCF₃ or -CF₃, very preferably F, Cl or -OCF₃,
- Z³: denotes -CH₂CH₂-, -CF₂CF₂-, -COO-, *trans*-CH=CH-, *trans*-CF=CF-, -CH₂O- or a single bond, preferably -CH₂CH₂-, -COO-, *trans*-CH=CH- or a single bond and very preferably -COO-, *trans*-CH=CH- or a single bond, and
- m: denotes 0, 1 or 3, preferably 1 or 3 and particularly preferably 1, and
- n: denotes 0, 1, 2 or 3, preferably 1, 2 or 3 and particularly preferably 1,
and
in the case where X² does not denote F, m may also denote 2,
and where the compounds of formula OT are excluded from compounds of formula III and its sub-formulae.

In a preferred embodiment of the present invention, the medium comprises one or more compounds of the formula IV 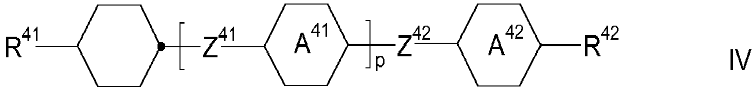 in which
- R⁴¹ and R⁴²,: independently of one another, have the meaning indicated for R² above under formula II, preferably R⁴¹ denotes alkyl and R⁴² denotes alkyl or alkoxy or R⁴¹ denotes alkenyl and R⁴² denotes alkyl, 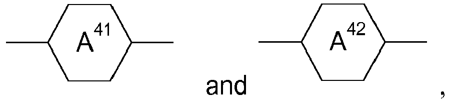
independently of one another and, if 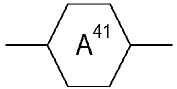 occurs twice, also these independently of one another, denote 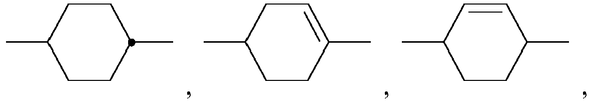 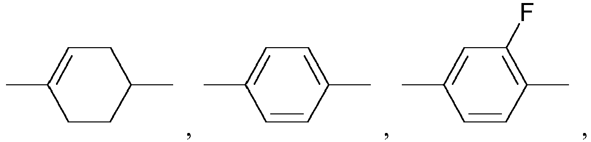 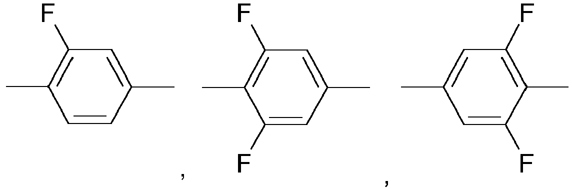 or 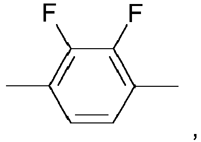 preferably one or more, particularly preferably one, of 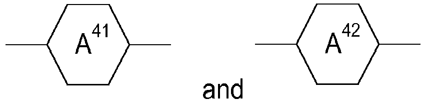 denote(s) 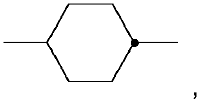
- Z⁴¹ and Z⁴²,: independently of one another and, if Z⁴¹ occurs twice, also these independently of one another, denote -CH₂CH₂-, -COO-, *trans*-CH=CH-, *trans*-CF=CF-, -CH₂O-, -CF₂O-, -C≡C- or a single bond, preferably one or more of them denote a single bond, and
- p: denotes 0, 1 or 2, preferably 0 or 1,
and where the compounds CV and PV are excluded from the compounds of formula IV and its subformulae.

The compounds of the formula IV are preferably dielectrically neutral compounds, preferably having a dielectric anisotropy in the range from -1.5 to 3.

In a preferred embodiment of the present invention, the media according to the invention in each case comprise one or more compounds of the formula IA selected from the group of the compounds of the formulae IA-1 to IA-12, preferably of the formula IA-2: 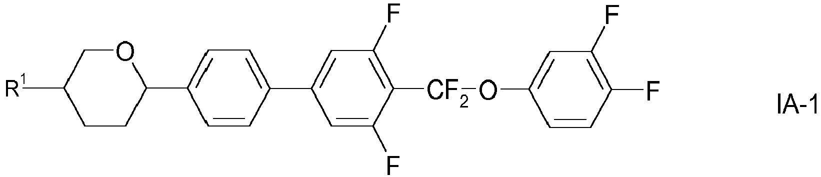 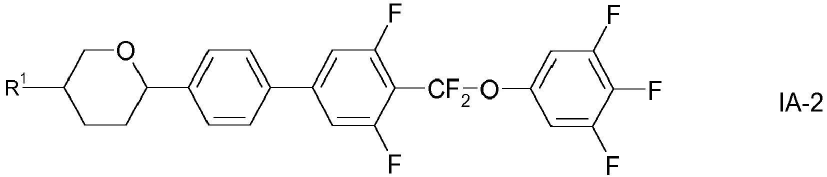 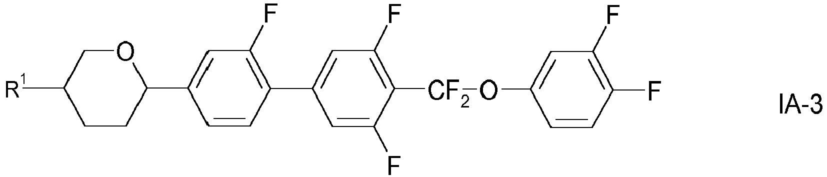 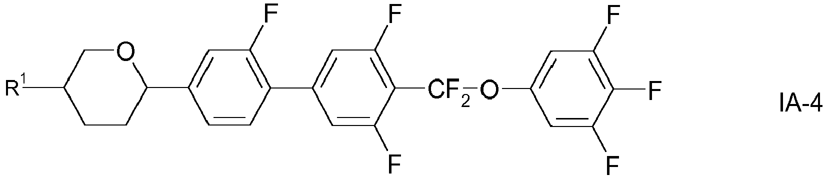 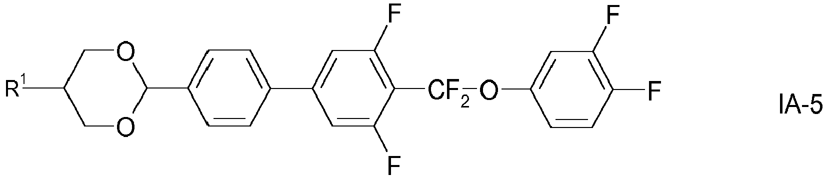 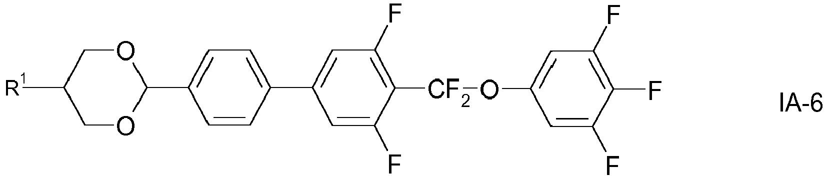 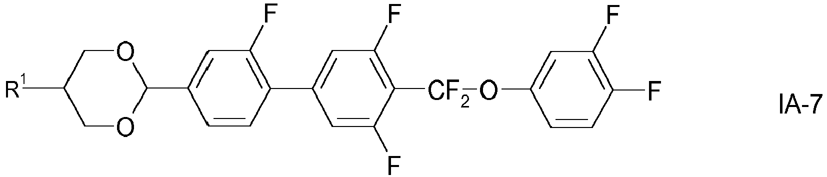 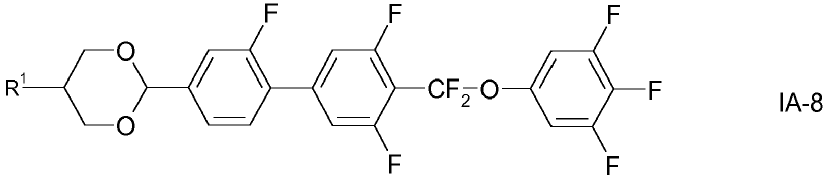 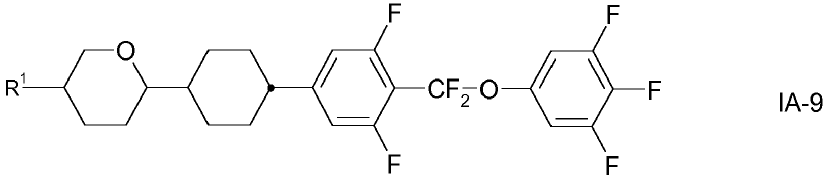 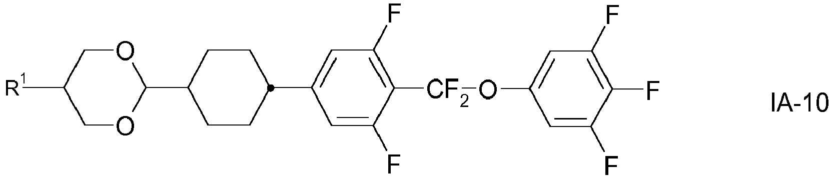 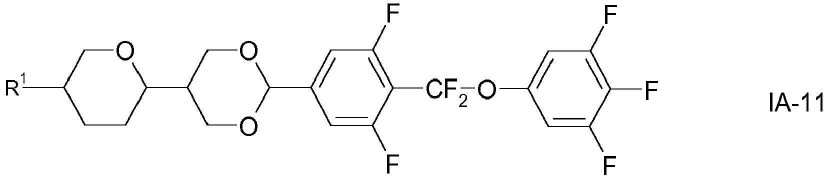 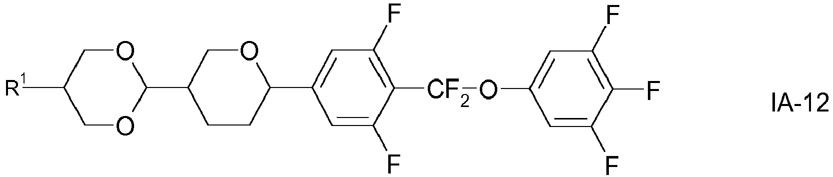 in which R¹ has the meaning indicated above under formula I.

In a preferred embodiment of the present invention, the media according to the invention in each case comprise one or more compounds of the formula IB selected from the group of the compounds of the formulae IB-1 to IB-12, preferably of the formulae IB-1 and/or IB-2 and/or IB-6 and/or IB-12: 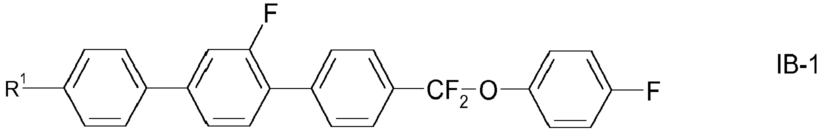 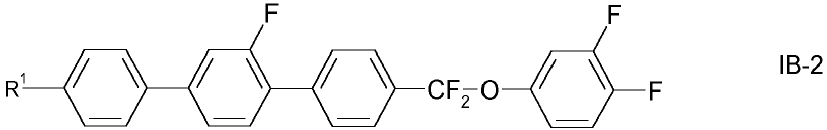 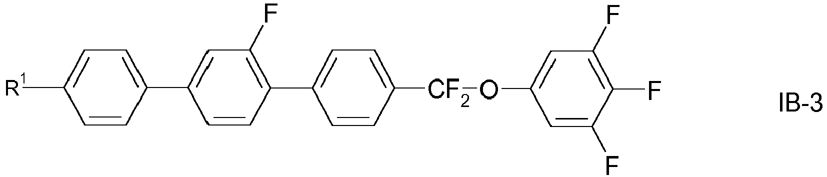 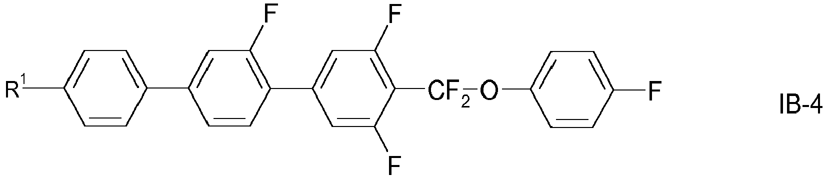 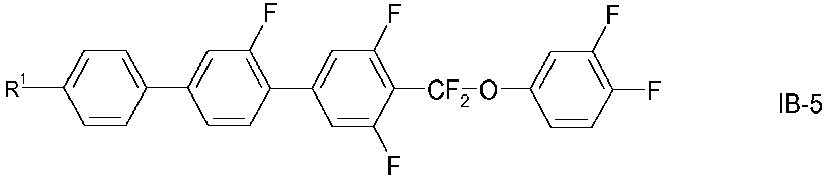 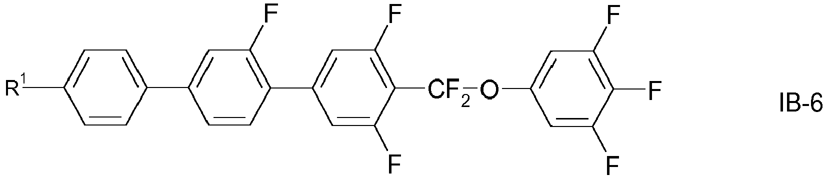 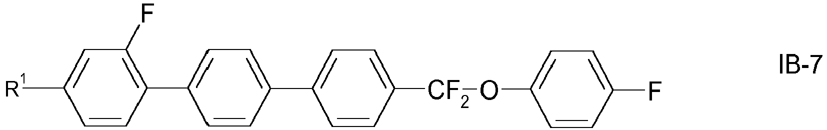 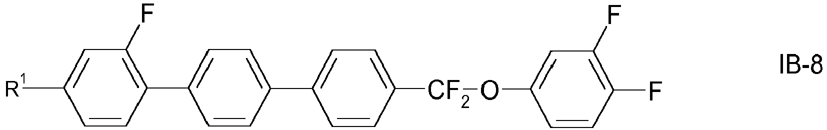 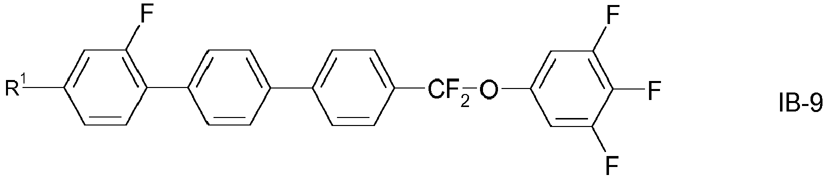 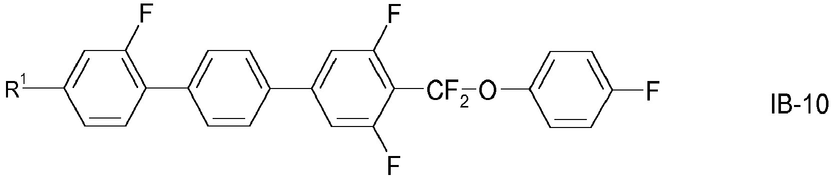 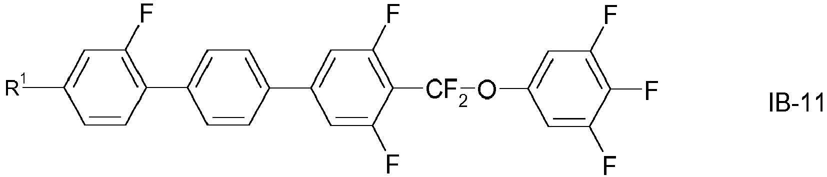 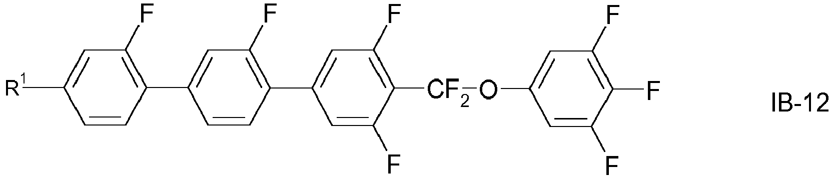 in which R¹ has the meaning indicated above under formula IB.

In a preferred embodiment of the present invention, the media according to the invention in each case comprise one or more compounds of the formula IC selected from the group of the compounds of the formulae IC-1 to IC-4: 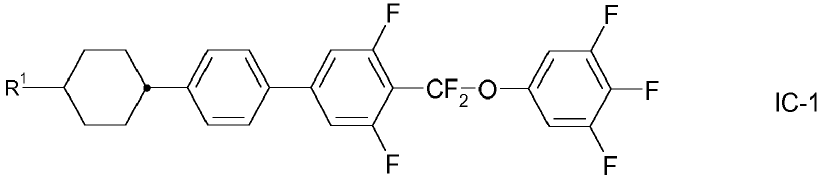 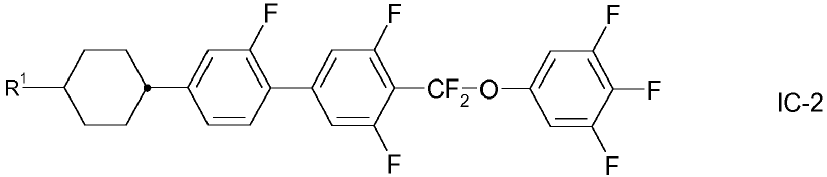 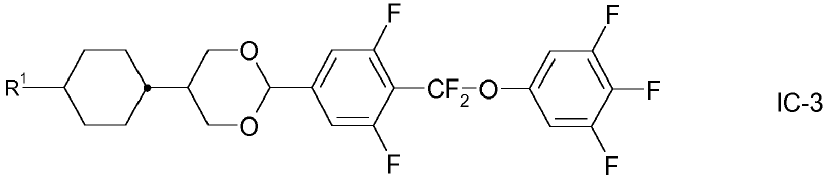 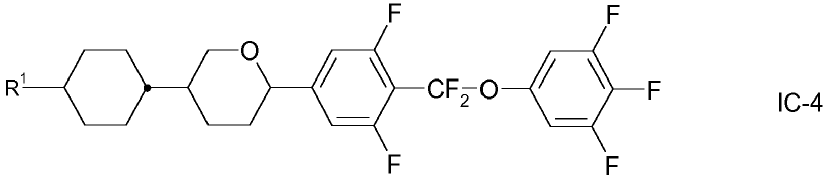 in which R¹ has the meaning indicated above under formula IC.

In addition to the compounds selected from the group of the compounds of the formulae I, CV, OT, PV, and IA to IC, or preferred sub-formulae thereof, the media according to the present invention preferably comprise one or more dielectrically positive compounds having a dielectric anisotropy of greater than 3, selected from the group of the formulae II and III.

In a preferred embodiment of the present invention, the media according to the invention comprise one or more compounds selected from the group of the compounds of the formulae II-1 to II-4, preferably of the formulae II-1 and/or II-2: 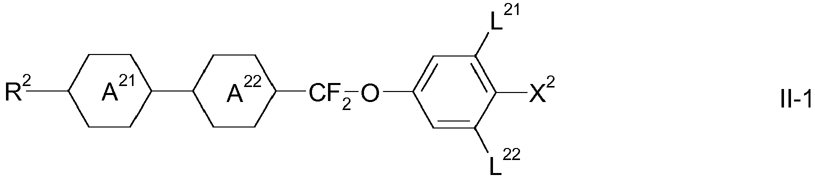 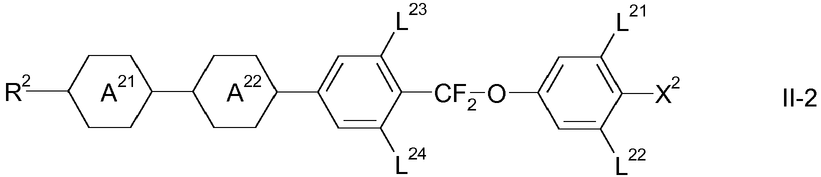 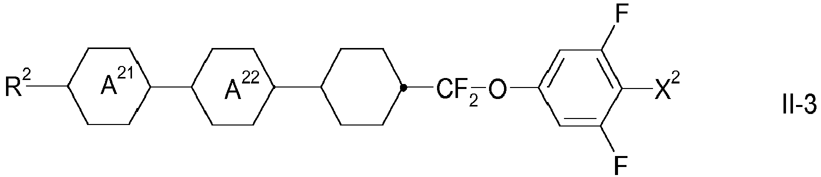 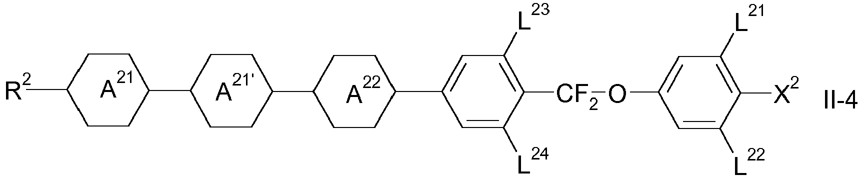 in which the parameters have the respective meanings indicated above under formula II, and L²³ and L²⁴, independently of one another, denote H or F, preferably L²³ denotes F, and 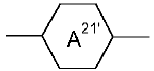 has one of the meanings given for 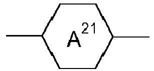 and, in the case of the formulae II-1 and II-4, X² preferably denotes F or OCF₃, particularly preferably F, and, in the case of the formula II-3, 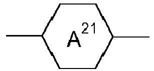 and 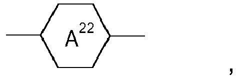 independently of one another, preferably denote 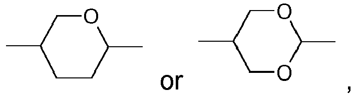 where the compounds of the formulae I, IA, IB and IC are excluded,
and/or selected from the group of the compounds of the formulae III-1 and III-2: 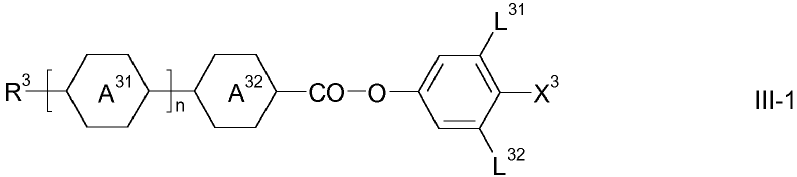 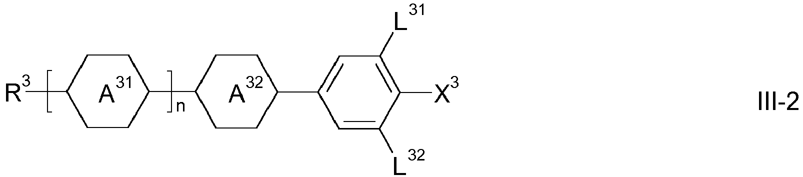 in which the occurring groups and parameters have the meanings given under formula III.

In a preferred embodiment, the media according to the present invention alternatively or in addition to the compounds of the formulae III-1 and/or III-2 comprise one or more compounds of the formula III-3 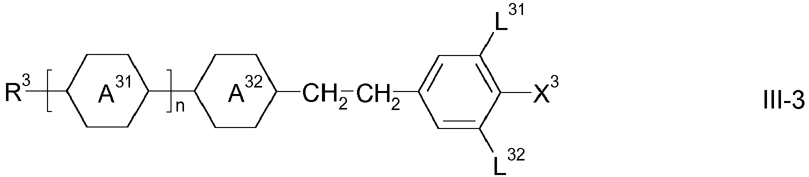 in which the parameters have the respective meanings indicated above, and the parameters L³¹ and L³², independently of one another and of the other parameters, denote H or F.

The media according to the invention preferably comprise one or more compounds selected from the group of the compounds of the formulae II-1 to II-4 in which L²¹ and L²² and/or L²³ and L²⁴ both denote F.

In a preferred embodiment, the media comprise one or more compounds which are selected from the group of the compounds of the formulae II-2 and II-4 in which L²¹, L²², L²³ and L²⁴ all denote F.

The media preferably comprise one or more compounds of the formula 11-1. The compounds of the formula II-1 are preferably selected from the group of the compounds of the formulae II-1a to II-1f: 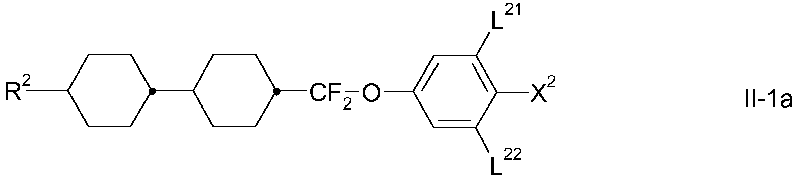 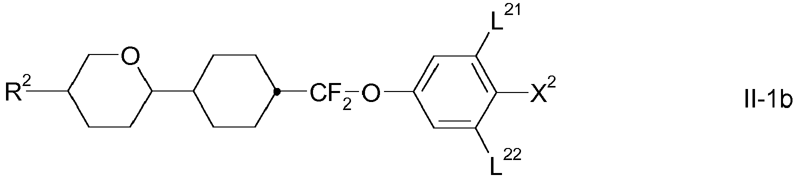 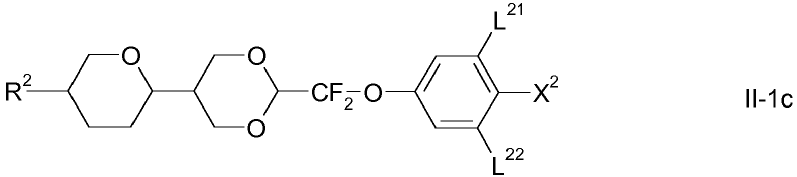 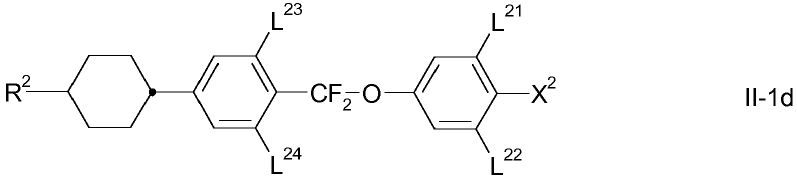 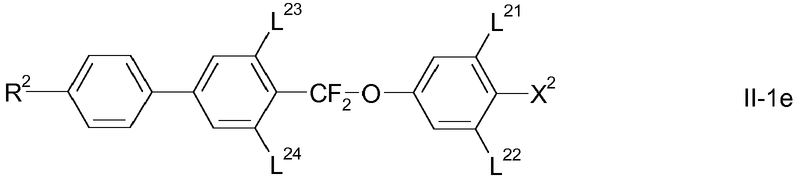 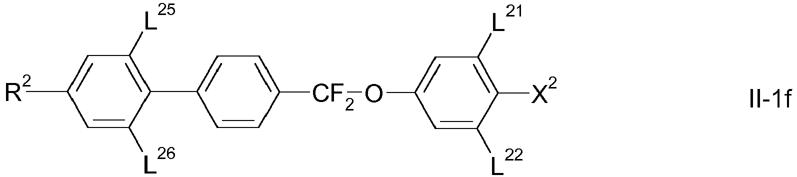 in which the parameters have the respective meanings indicated above, and L²³, L²⁴, L²⁵ and L²⁶, independently of one another and of the other parameters, denote H or F, and preferably
in formulae II-1a , II-1 b and II-1c
L²¹ and L²² both denote F,
in formulae II-1d and II-1e
L²¹ and L²² both denote F and/or L²³ and L²⁴ both denote F, and
in formula II-1f
L²¹, L²² and L²⁵ denote F and L²⁶ denotes H.

Especially preferred compounds of the formula II-1 are 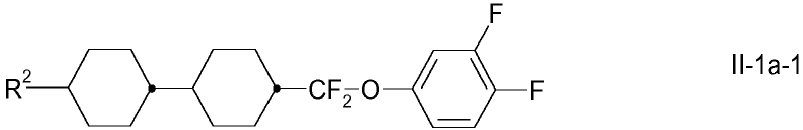 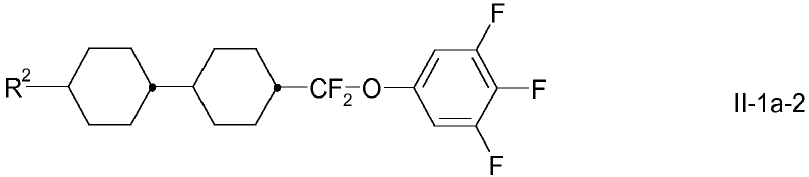 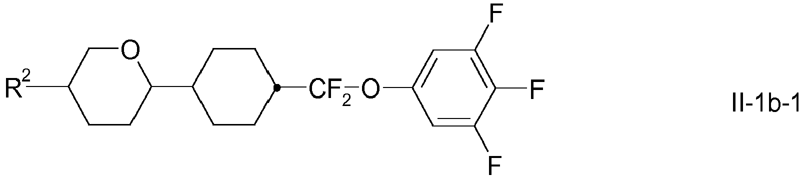 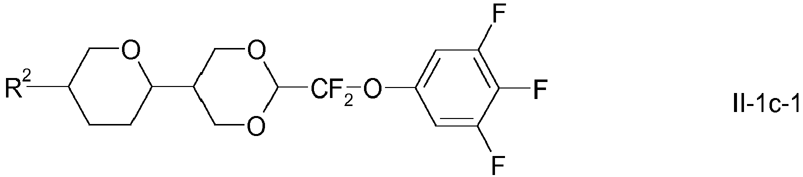 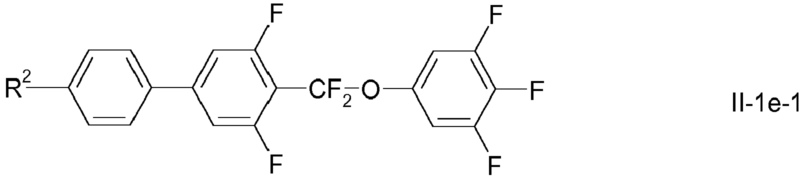 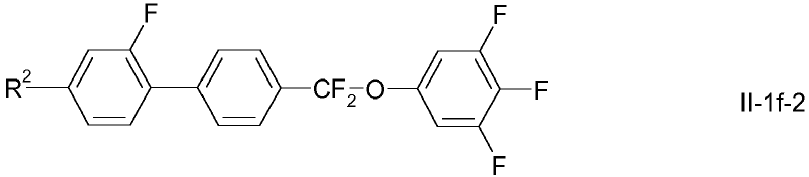 in which R² has the meaning indicated above.

The media preferably comprise one or more compounds of the formula II-2, which are preferably selected from the group of the compounds of the formulae II-2a to II-2j: 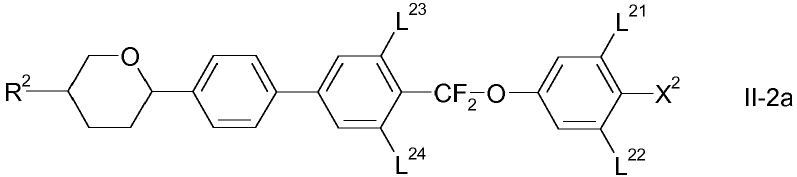 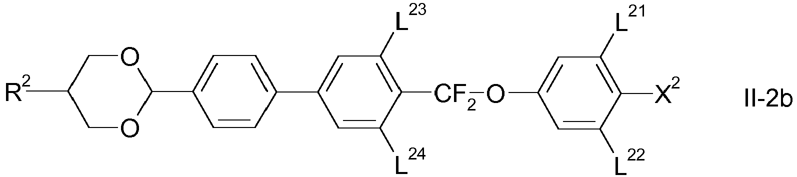 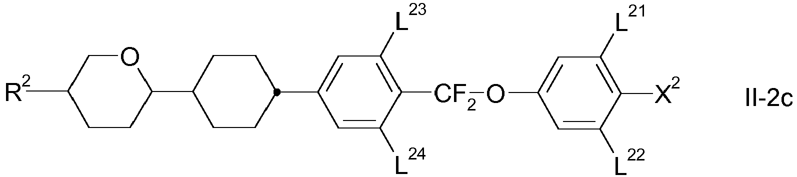 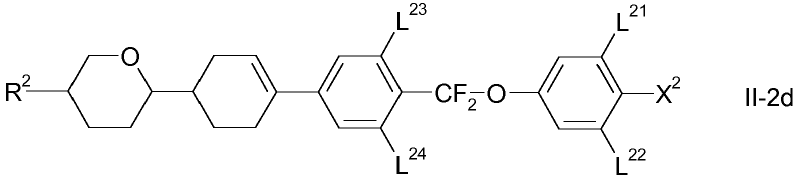 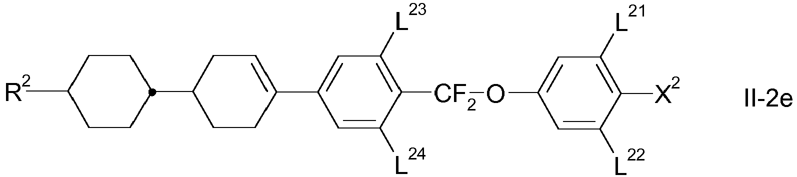 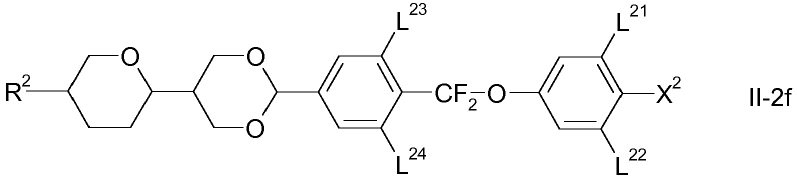 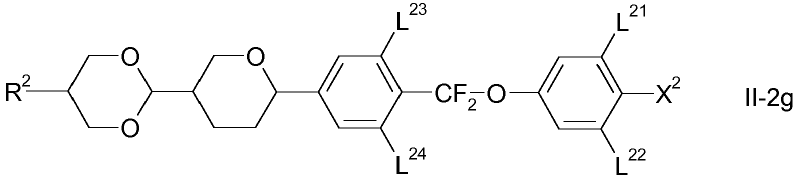 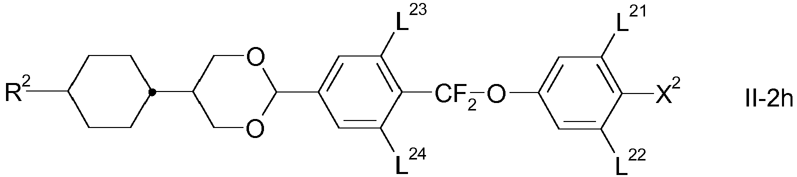 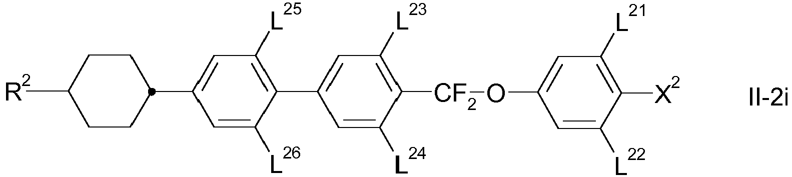 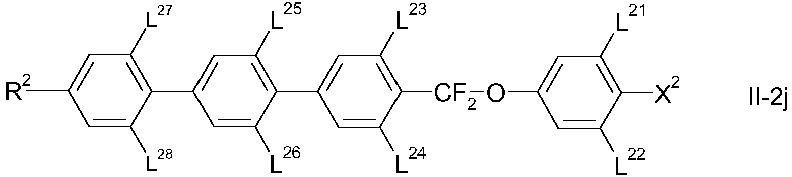 in which the parameters have the respective meanings indicated above, and L²³ to L²⁸, independently of one another, denote H or F, preferably L²⁷ and L²⁸ both denote H, particularly preferably L²⁶ denotes H, and where the compounds of the formulae IA, IB and IC are excluded.

The media according to the invention preferably comprise one or more compounds selected from the group of the compounds of the formulae II-1a to II-1j in which L²¹ and L²² both denote F and/or L²³ and L²⁴ both denote F.

In a preferred embodiment, the media according to the invention comprise one or more compounds selected from the group of the compounds of the formulae II-2a to II-2j in which L²¹, L²², L²³ and L²⁴ all denote F.

Especially preferred compounds of the formula II-2 are the compounds of the following formulae:

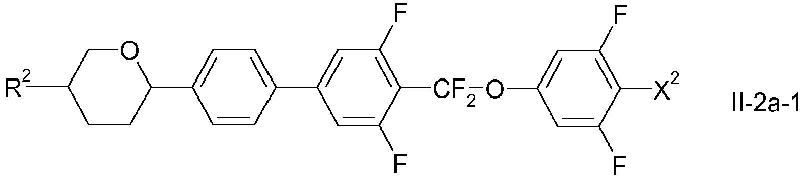

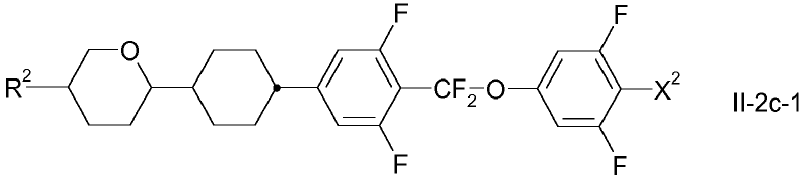

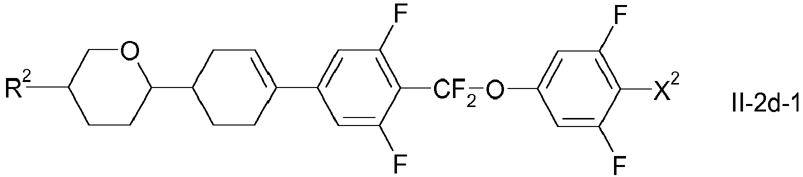

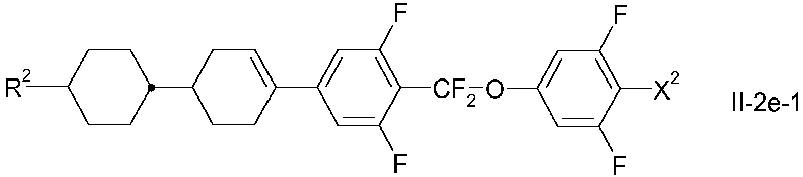

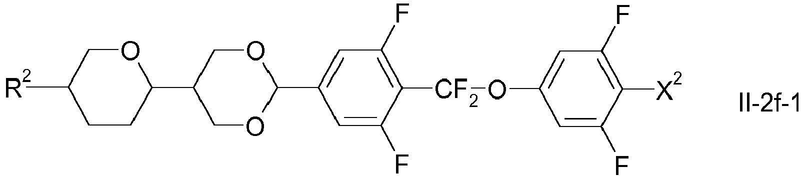

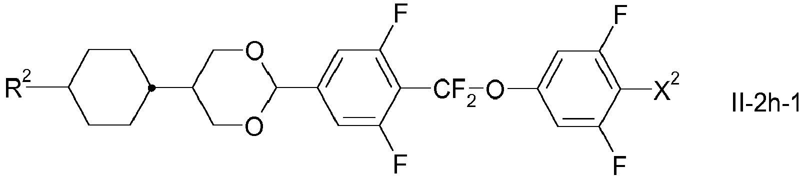

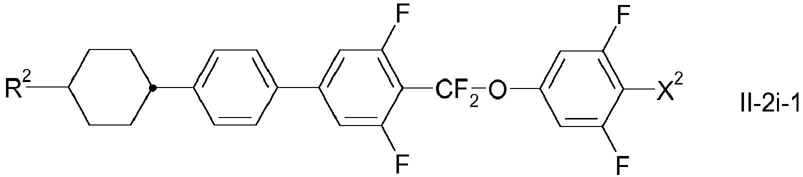

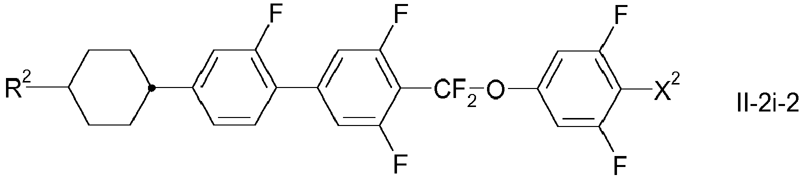

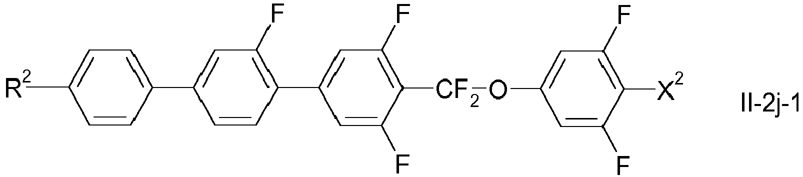

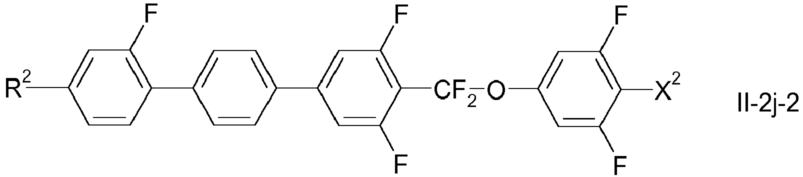

in which R² and X² have the meanings indicated above, and X² preferably denotes F, and where the compounds of the formulae IA, IB and IC are excluded.

The media according to the invention preferably comprise one or more compounds of the formula II-3, preferably selected from the group of the compounds of the formulae II-3a to II-3c: 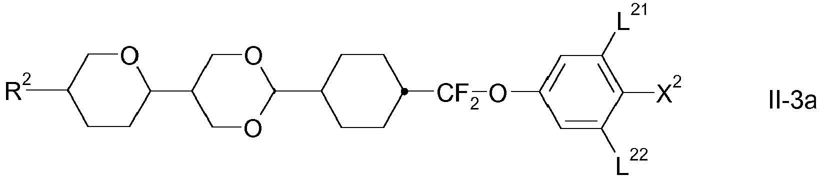 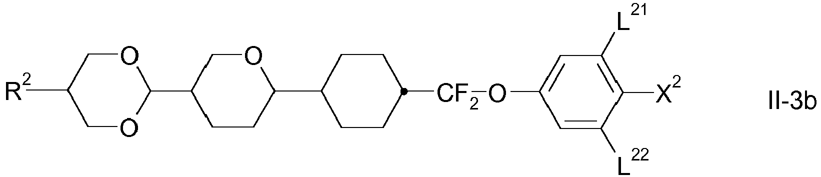 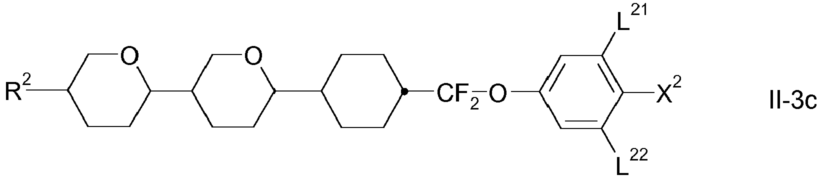 in which the parameters have the respective meanings indicated above, and L²¹ and L²² preferably both denote F, and where the compounds of the formulae IA, IB and IC are excluded.

In a preferred embodiment, the media according to the invention comprise one or more compounds of the formula II-4, preferably of the formula II-4a, 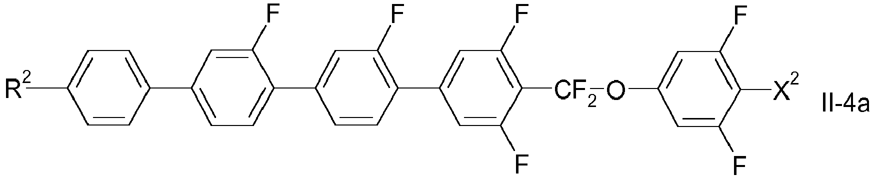 in which the parameters have the meaning given above, and X² preferably denotes F or OCF₃, particularly preferably F.

The media according to the invention preferably comprise one or more compounds of the formula III-1, preferably selected from the group of the compounds of the formulae III-1a and III-1b: 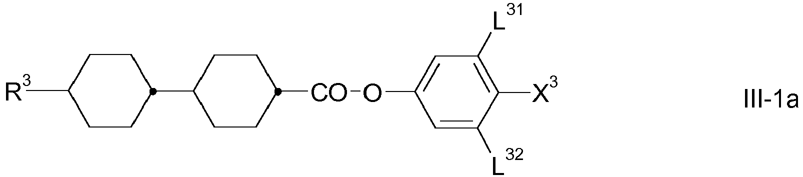 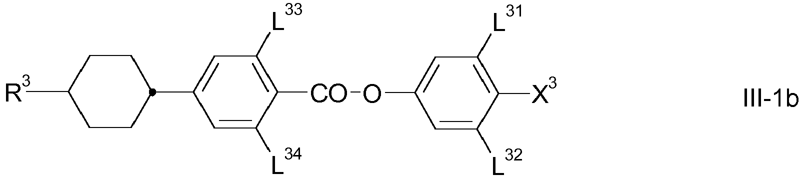 in which the parameters have the respective meanings indicated above, and the parameters L³³ and L³⁴, independently of one another and of the other parameters, denote H or F.

The media according to the invention preferably comprise one or more compounds of the formula III-1 a, preferably selected from the group of the compounds of the formulae III-1a-1 to III-1a-6: 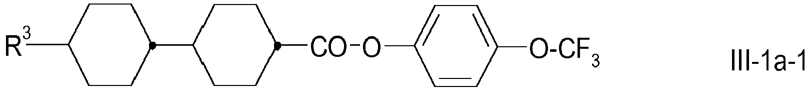 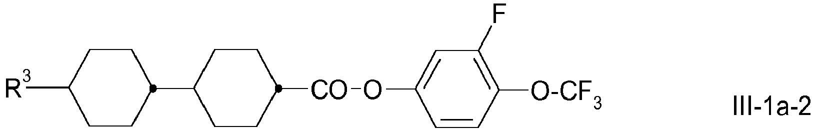 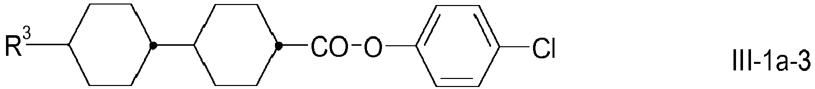 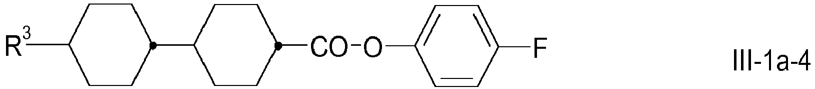 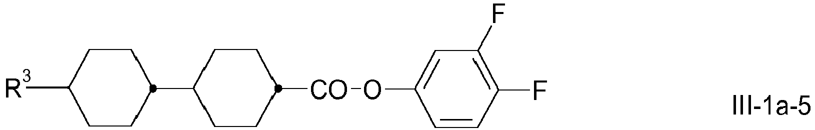 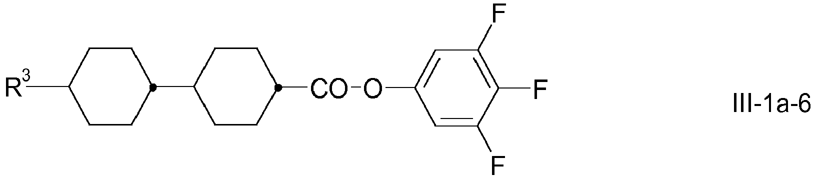 in which R³ has the meaning indicated above.

The media according to the invention preferably comprise one or more compounds of the formula III-1 b, preferably selected from the group of the compounds of the formulae III-1b-1 to III-1b-4, preferably of the formula III-1b-4: 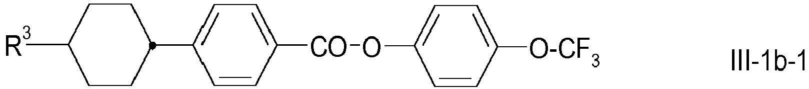 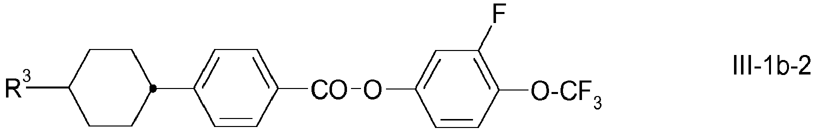 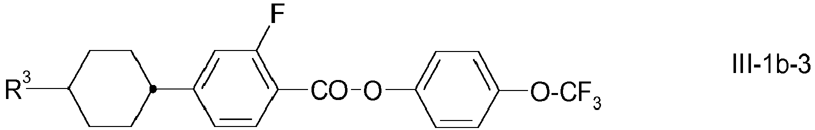 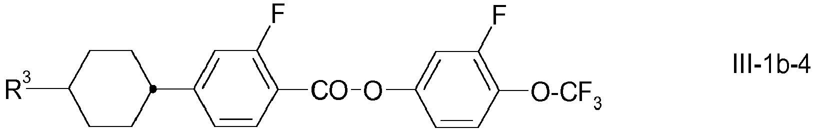 in which R³ has the meaning indicated above.

The media according to the invention preferably comprise one or more compounds of the formula III-2, preferably selected from the group of the compounds of the formulae III-2a to III-2j: 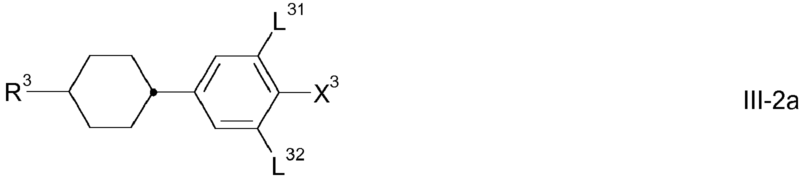 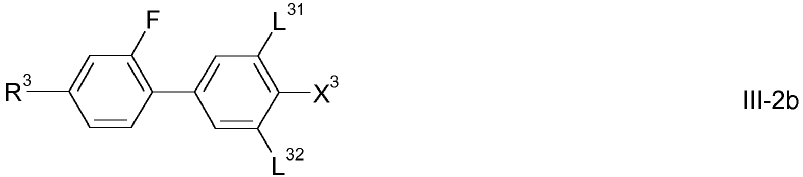 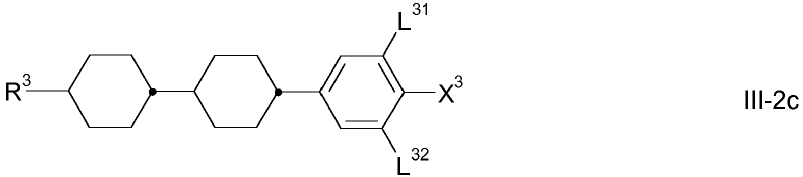 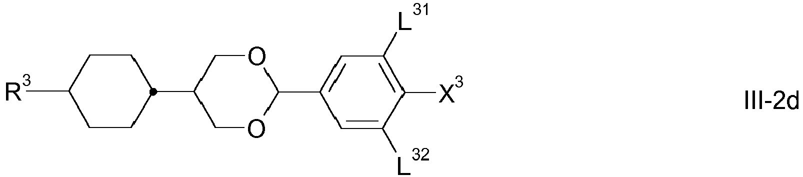 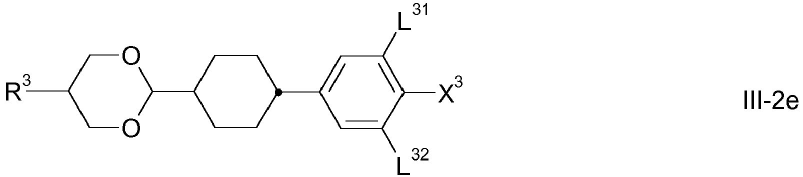 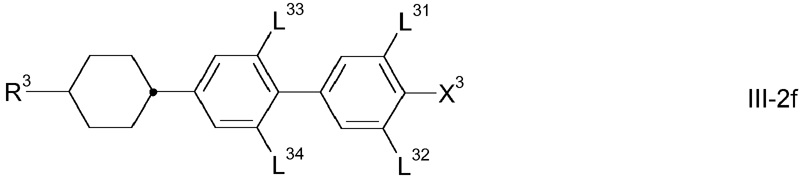 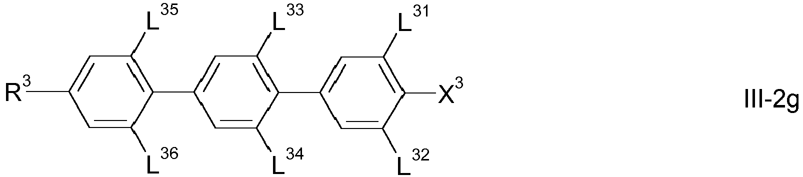 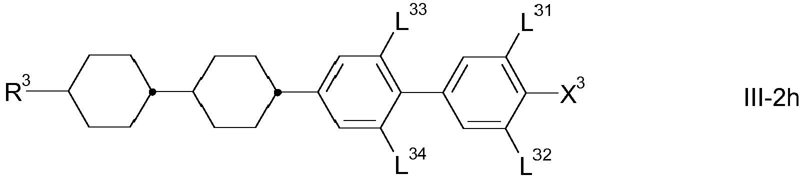 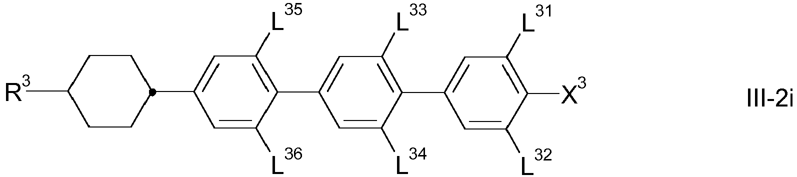 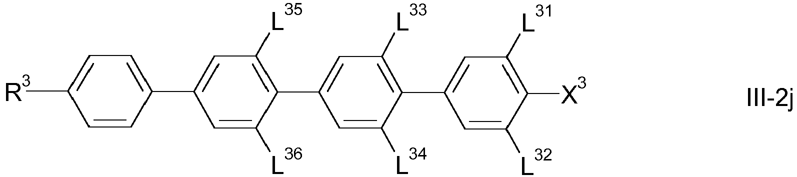 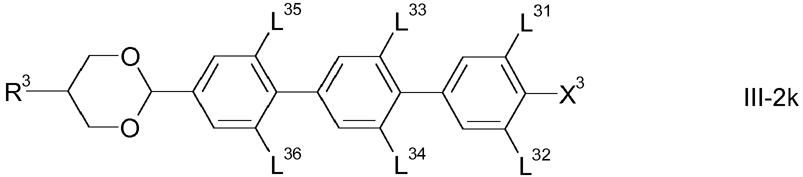 in which the parameters have the meaning given above and preferably in which the parameters have the respective meanings indicated above, and the parameters L³³, L³⁴, L³⁵ and L³⁶, independently of one another and of the other parameters, denote H or F.

The media according to the invention preferably comprise one or more compounds of the formula III-2a, preferably selected from the group of the compounds of the formulae III-2a-1 to III-2a-5: 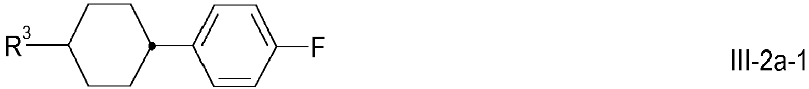 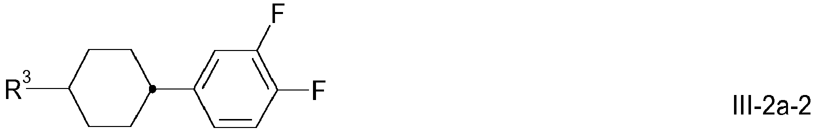 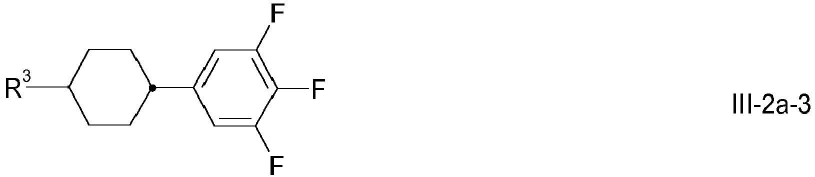 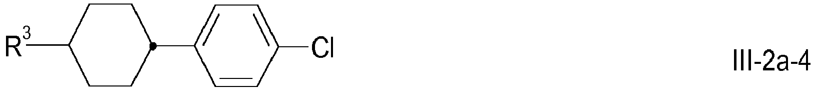 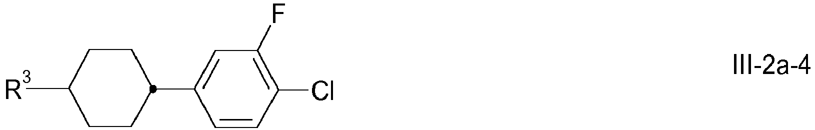 in which R³ has the meaning indicated above.

The media according to the invention preferably comprise one or more compounds of the formula III-2b, preferably selected from the group of the compounds of the formulae III-2b-1 and III-2b-2, preferably of the formula III-2b-2: 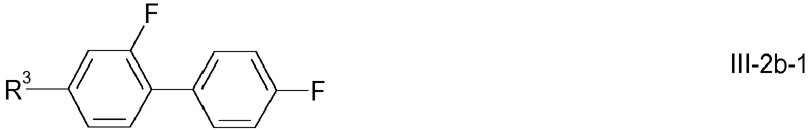 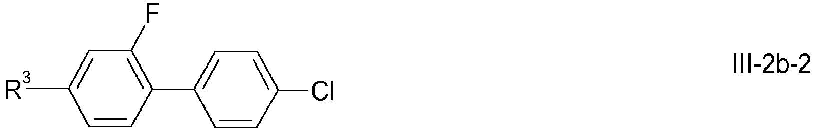 in which R³ has the meaning indicated above.

The media according to the invention preferably comprise one or more compounds of the formula III-2c, preferably selected from the group of the compounds of the formulae III-2c-1 to III-2c-4: 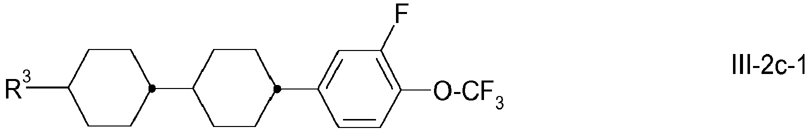 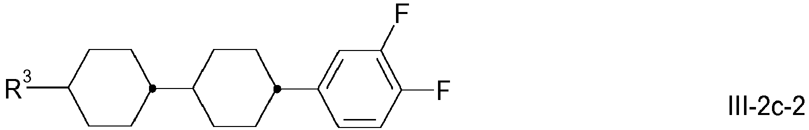 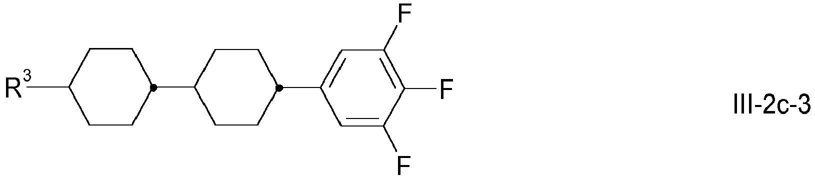 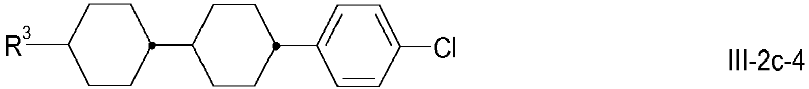 in which R³ has the meaning indicated above.

The media according to the invention preferably comprise one or more compounds selected from the group of the compounds of the formulae III-2d and III-2e, preferably selected from the group of the compounds of the formulae III-2d-1 and III-2e-1: 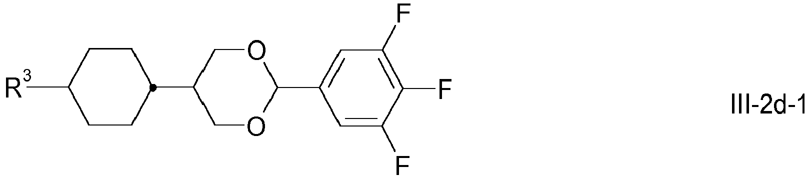 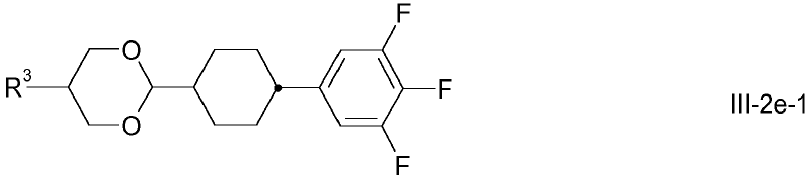 in which R³ has the meaning indicated above.

The media according to the invention preferably comprise one or more compounds of the formula III-2f, preferably selected from the group of the compounds of the formulae III-2f-1 to III-2f-5: 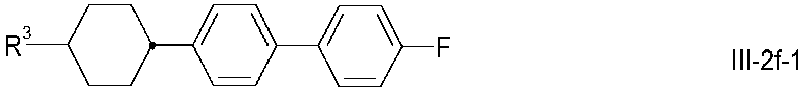 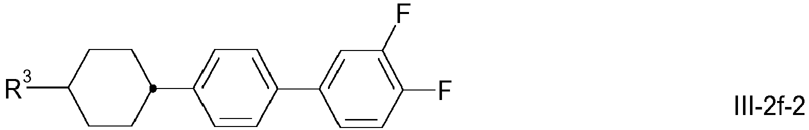 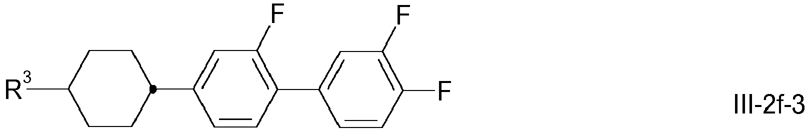 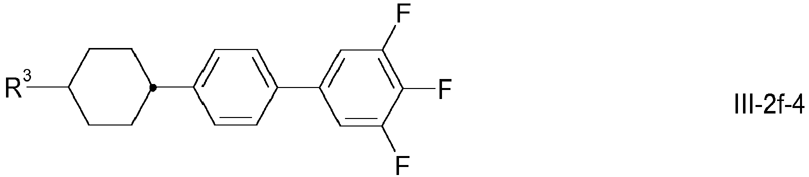 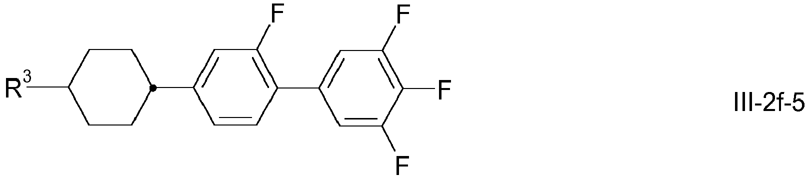 in which R³ has the meaning indicated above.

The media according to the invention preferably comprise one or more compounds of the formula III-2g, preferably selected from the group of the compounds of the formulae III-2g-1 to III-2g-5: 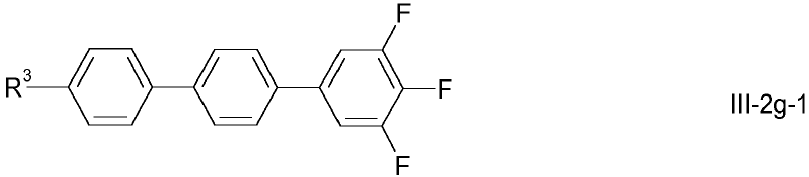 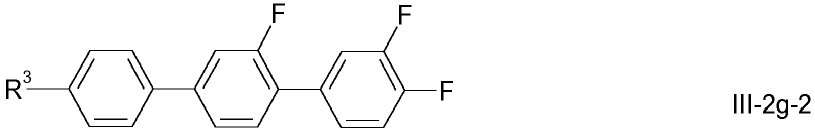 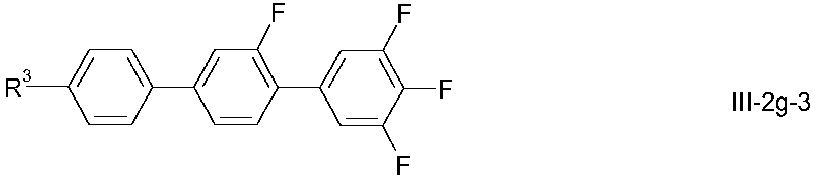 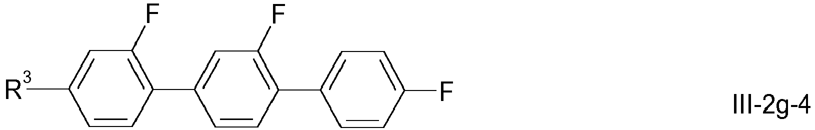 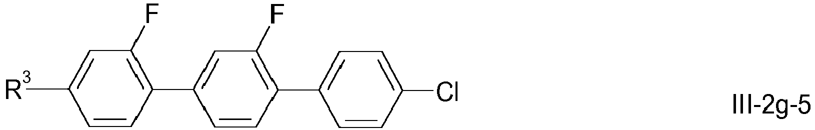 in which R³ has the meaning indicated above.

The media according to the invention preferably comprise one or more compounds of the formula III-2h, preferably selected from the group of the compounds of the formulae III-2h-1 to III-2h-3, preferably of the formula III-2h-3: 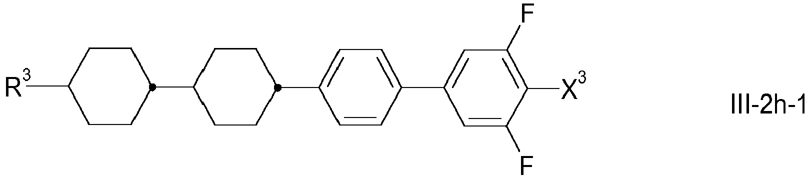 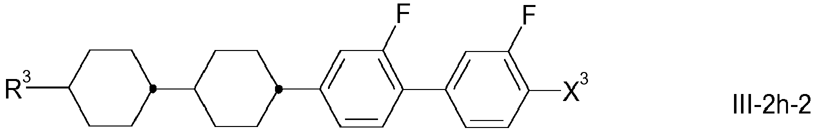 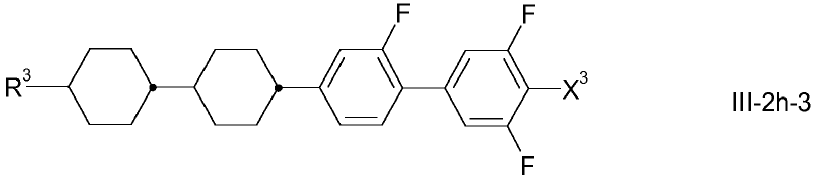 in which the parameters have the meaning given above, and X³ preferably denotes F.

The media according to the invention preferably comprise one or more compounds of the formula III-2i, preferably selected from the group of the compounds of the formulae III-2i-1 and III-2i-2, preferably of the formula III-2i-2: 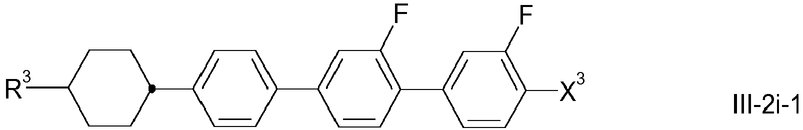 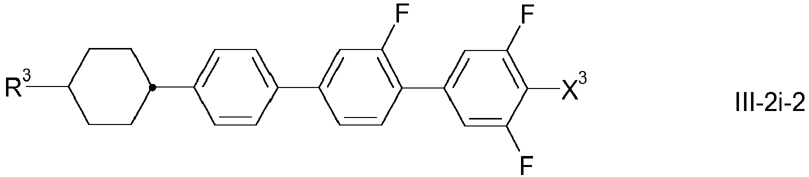 in which the parameters have the meaning given above, and X³ preferably denotes F.

The media according to the invention preferably comprise one or more compounds of the formula III-2j, preferably selected from the group of the compounds of the formulae III-2j-1 and III-2j-2, preferably of the formula III-2j-1: 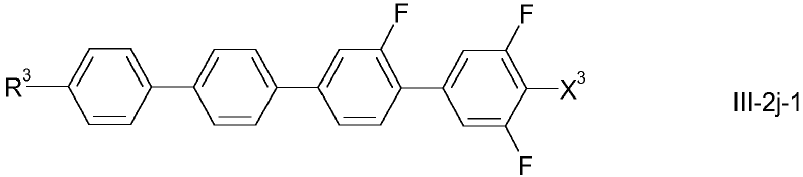 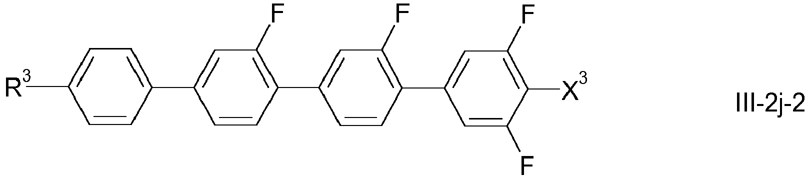 in which the parameters have the meaning given above.

The media according to the invention preferably comprise one or more compounds of the formula III-2k, preferably selected from the compounds of the formula III-2k-1: 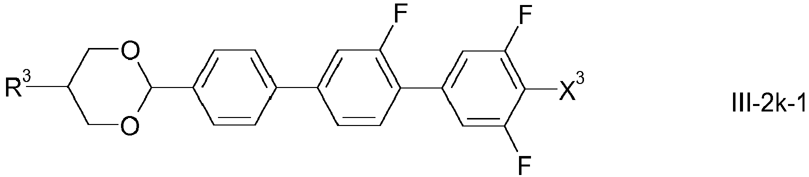 in which the parameters have the meaning given above and X³ preferably denotes F.

Alternatively or in addition to the compounds of the formulae III-1 and/or III-2, the media according to the present invention may comprise one or more compounds of the formula III-3 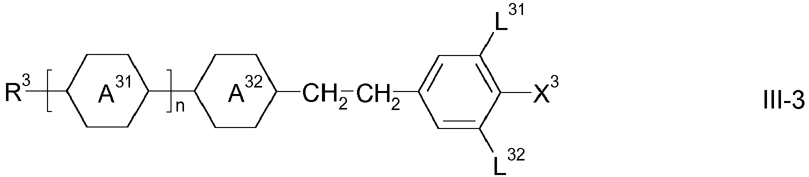 in which the parameters have the respective meanings indicated above under formula III.

These compounds are preferably selected from the group of the formulae III-3a and III-3b: 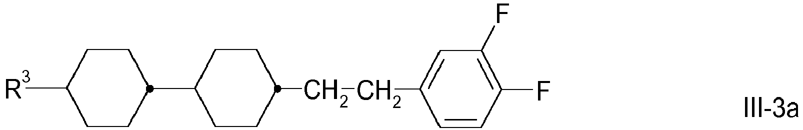 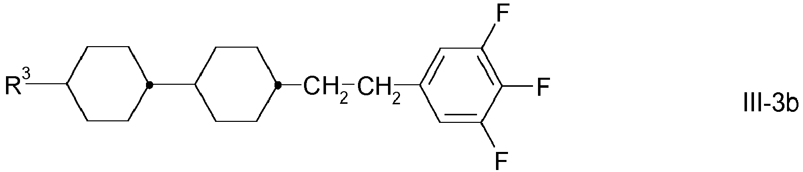 in which R³ has the meaning indicated above.

The liquid-crystalline media according to the present invention preferably comprise a dielectrically neutral component, component C. This component has a dielectric anisotropy in the range from -1.5 to 3. It preferably comprises, more preferably predominantly consists of, even more preferably essentially consists of and especially preferably entirely consists of dielectrically neutral compounds having a dielectric anisotropy in the range from -1.5 to 3. This component preferably comprises, more preferably predominantly consists of, even more preferably essentially consists of and very preferably entirely consists of one or more dielectrically neutral compounds of the formula IV having a dielectric anisotropy in the range from -1.5 to 3.

The dielectrically neutral component, component C, preferably comprises one or more compounds selected from the group of the compounds of the formulae IV-1 to IV-6: 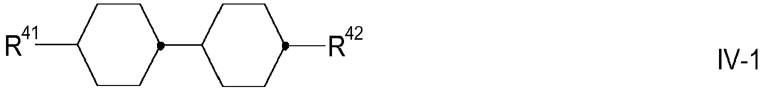 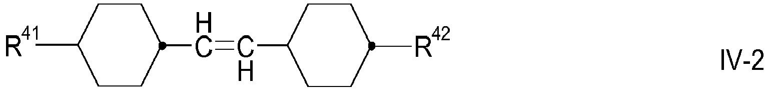 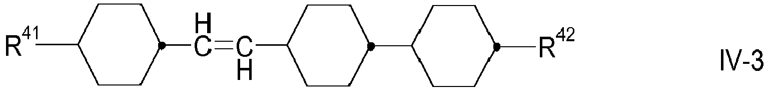 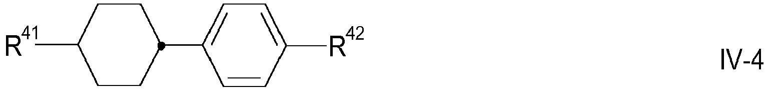 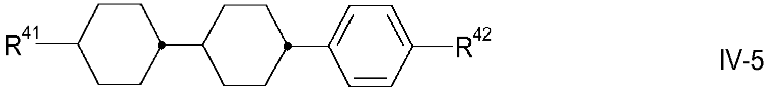 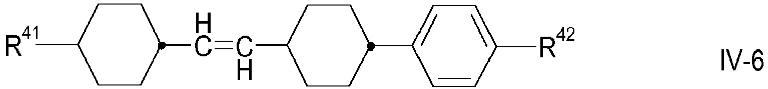 in which R⁴¹ and R⁴² have the respective meanings indicated above under formula IV, and in formulae IV-1, IV-5 and IV-6 R⁴¹ preferably denotes alkyl or alkenyl, preferably alkenyl, and R⁴² preferably denotes alkyl or alkenyl, preferably alkyl, in formula IV-2 R⁴¹ and R⁴² preferably denote alkyl, and in formula IV-4 R⁴¹ preferably denotes alkyl or alkenyl, more preferably alkyl, and R⁴² preferably denotes alkyl or alkoxy, more preferably alkoxy.

The dielectrically neutral component, component C, preferably comprises one or more compounds selected from the group of the compounds of the formulae IV-1, IV-4, IV-5 and IV-6, preferably one or more compounds of the formula IV-1 and one or more compounds selected from the group of the formulae IV-4 and IV-5, more preferably one or more compounds of each of the formulae IV-1, IV-4 and IV-5 and very preferably one or more compounds of each of the formulae IV-1, IV-4, IV-5 and IV-6.

In a preferred embodiment, the media according to the invention comprise one or more compounds of the formula IV-5, more preferably selected from the respective sub-formulae thereof of the formulae CCP-V-n and/or CCP-nV-m and/or CCP-Vn-m, more preferably of the formulae CCP-V-n and/or CCP-V2-n and very preferably CCP-V2-1. The definitions of these abbreviations (acronyms) are indicated below in Table D or are evident from Tables A to C.

In a likewise preferred embodiment, the media according to the invention comprise one or more compounds of the formula IV-1, more preferably selected from the respective sub-formulae thereof of the formulae CC-n-m, CC-n-V, CC-n-Vm, CC-V-V, CC-V-Vn and/or CC-nV-Vm, more preferably of the formulae CC-n-V and/or CC-n-Vm and very preferably selected from the group of the formulae CC-4-V, CC-5-V, CC-3-V1, CC-4-V1, CC-5-V1, CC-3-V2 and CC-V-V1. The definitions of these abbreviations (acronyms) are likewise indicated below in Table D or are evident from Tables A to C.

In a further preferred embodiment of the present invention, which may be the same as the previous one or a different one, the liquid-crystal mixtures according to the present invention comprise component C which comprises, preferably predominantly consists of and very preferably entirely consists of compounds of the formula IV selected from the group of the compounds of the formulae IV-1 to IV-6 as shown above and optionally of the formulae IV-7 to IV-13: 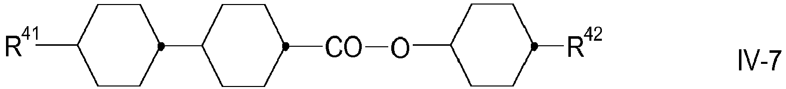 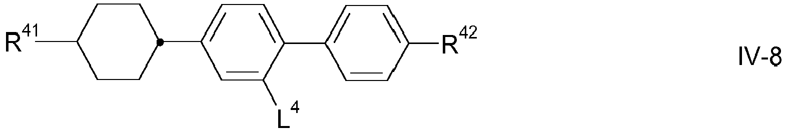 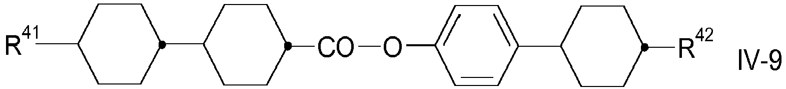 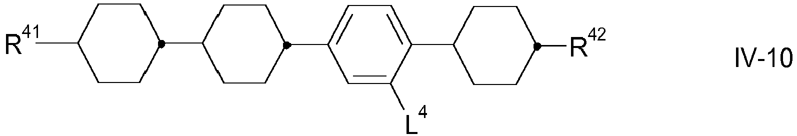 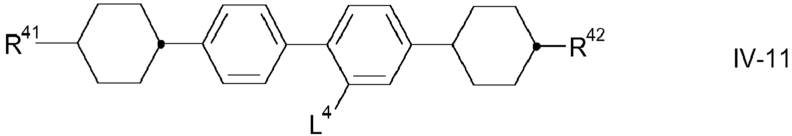 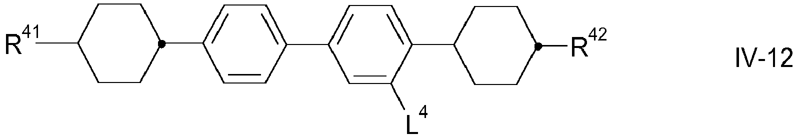 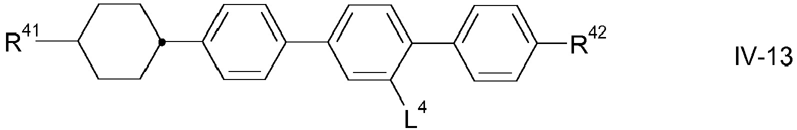 in which
- R⁴¹ and R⁴²,: independently of one another, denote alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, and
- L⁴: denotes H or F.

In a preferred embodiment, the media according to the invention comprise one or more compounds of the formula IV-8, more preferably selected from the respective sub-formulae thereof of the formulae CPP-3-2, CPP-5-2 and CGP-3-2, more preferably of the formulae CPP-3-2 and/or CGP-3-2 and very particularly preferably of the formula CPP-3-2. The definitions of these abbreviations (acronyms) are indicated below in Table D or are evident from Tables A to C.

The liquid-crystalline media according to the present invention preferably comprise one or more compounds of the formula V 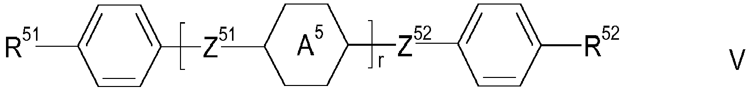 in which
- R⁵¹ and R⁵²,: independently of one another, have the meaning indicated for R² above under formula II, preferably R⁵¹ denotes alkyl and R⁵² denotes alkyl or alkenyl, 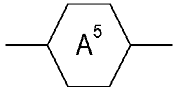 and, if it occurs twice, independently of one another on each occurrence, denotes 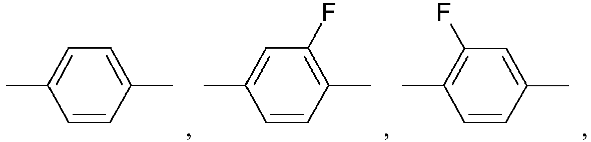 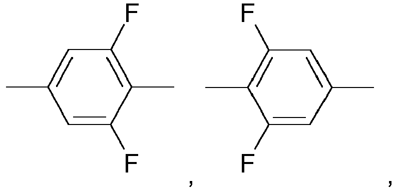 or 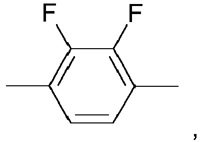 preferably one or more of 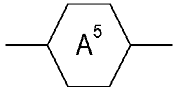 denote 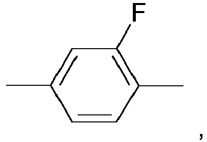
- Z⁵¹ and Z⁵²,: independently of one another and, if Z⁵¹ occurs twice, also these independently of one another, denote -CH₂CH₂-, -COO-, *trans*-CH=CH-, *trans*-CF=CF-, -CH₂O-, -CF₂O- or a single bond, preferably one or more of them denote(s) a single bond, and
- r: denotes 0, 1 or 2, preferably 0 or 1, particularly preferably 1.

The compounds of the formula V are preferably dielectrically neutral compounds having a dielectric anisotropy in the range from -1.5 to 3.

The media according to the invention preferably comprise one or more compounds selected from the group of the compounds of the formulae V-1 and V-2: 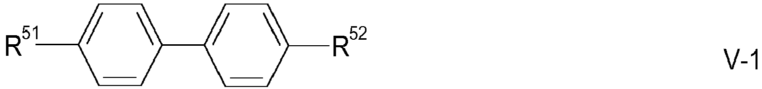 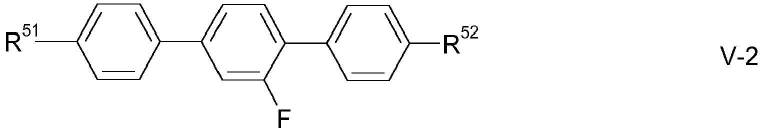 in which R⁵¹ and R⁵² have the respective meanings indicated above under formula V, and R⁵¹ preferably denotes alkyl, and in formula V-1 R⁵² preferably denotes alkenyl, preferably -(CH₂)₂-CH=CH-CH₃, and in formula V-2 R⁵² preferably denotes alkyl or alkenyl, preferably -(CH₂)₂-CH=CH₂ or -(CH₂)₂-CH=CH-CH₃.

The media according to the invention preferably comprise one or more compounds selected from the group of the compounds of the formulae V-1 and V-2 in which R⁵¹ preferably denotes n-alkyl, and in formula V-1 R⁵² preferably denotes alkenyl, and in formula V-2 R⁵² preferably denotes n-alkyl.

In a preferred embodiment, the media according to the invention comprise one or more compounds of the formula V-1, more preferably of the subformula PP-n-2Vm thereof, even more preferably of the formula PP-1-2V1. The definitions of these abbreviations (acronyms) are indicated below in Table D or are evident from Tables A to C.

In a preferred embodiment, the media according to the invention comprise one or more compounds of the formula V-2, more preferably of the subformulae PGP-n-m, PGP-n-2V and PGP-n-2Vm thereof, even more preferably of the sub-formulae PGP-3-m, PGP-n-2V and PGP-n-V1 thereof, very preferably selected from the formulae PGP-3-2, PGP-3-3, PGP-3-4, PGP-3-5, PGP-1-2V, PGP-2-2V and PGP-3-2V. The definitions of these abbreviations (acronyms) are likewise indicated below in Table D or are evident from Tables A to C.

Alternatively or in addition to the compounds of the formulae II and/or III, the media according to the present invention may comprise one or more dielectrically positive compounds of the formula VI 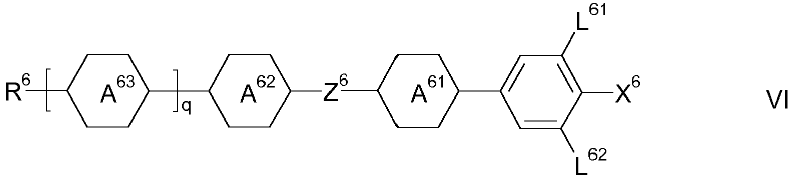 in which
- R⁶: denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms and preferably alkyl or alkenyl, 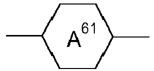 to 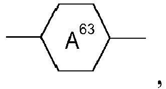 independently of one another, denote 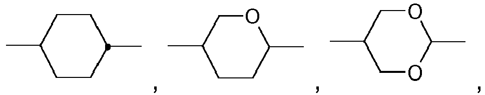 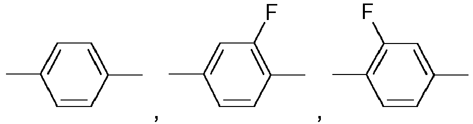 or 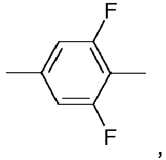
- L⁶¹ and L⁶²,: independently of one another, denote H or F, preferably L⁶¹ denotes F, and
- X⁶: denotes halogen, halogenated alkyl or alkoxy having 1 to 3 C atoms or halogenated alkenyl or alkenyloxy having 2 or 3 C atoms, preferably F, Cl, -OCF₃ or -CF₃, very preferably F, Cl or -OCF₃,
- Z⁶: denotes -CH₂CH₂-, -CF₂CF₂-, -COO-, *trans*-CH=CH-*, trans*-CF=CF-, -CH₂O- or -CF₂O-, preferably -CH₂CH₂-, -COO- or *trans*-CH=CH- and very preferably -COO- or *trans*-CH=CH-*,* and
- q: denotes 0 or 1.

The media according to the present invention preferably comprise one or more compounds of the formula VI, preferably selected from the group of the compounds of the formulae VI-1 and VI-2: 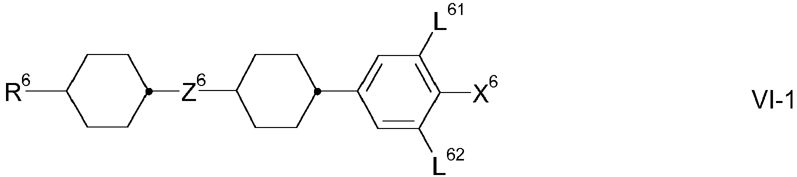 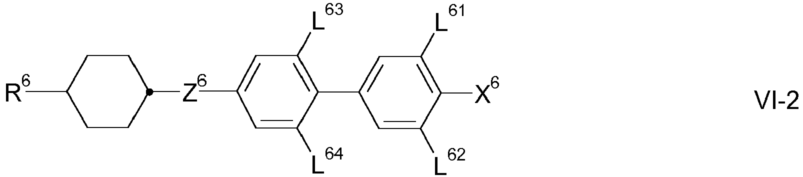 in which the parameters have the respective meanings indicated above, and the parameters L⁶³ and L⁶⁴, independently of one another and of the other parameters, denote H or F, and Z⁶ preferably denotes -CH₂-CH₂-.

The compounds of the formula VI-1 are preferably selected from the group of the compounds of the formulae VI-1a and VI-1b: 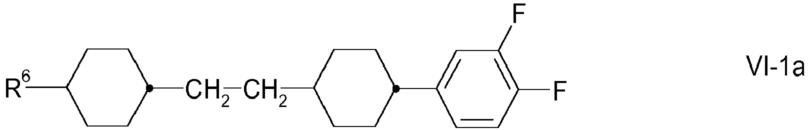 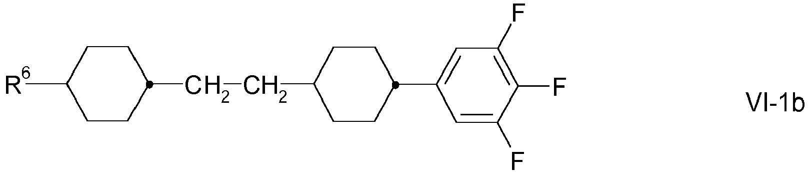 in which R⁶ has the meaning indicated above.

The compounds of the formula VI-2 are preferably selected from the group of the compounds of the formulae VI-2a to VI-2d: 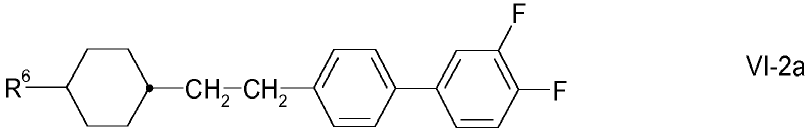 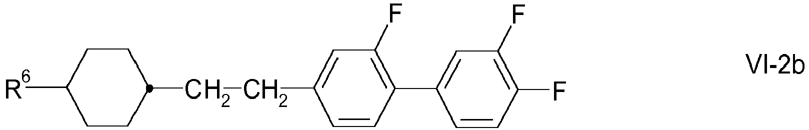 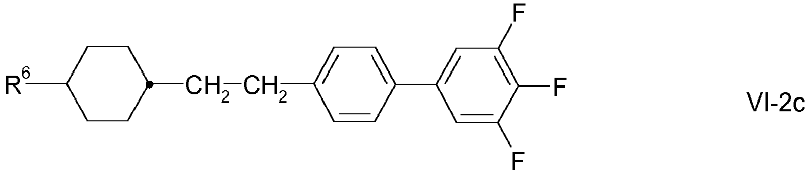 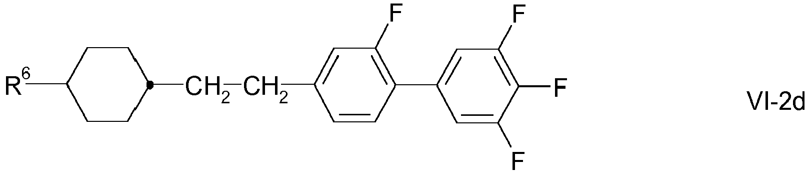 in which R⁶ has the meaning indicated above.

In addition, the liquid-crystal media according to the present invention may comprise one or more compounds of the formula VII 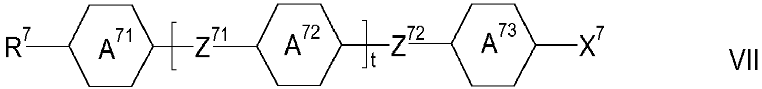 in which
R⁷ has the meaning indicated for R² above under formula II,
one of 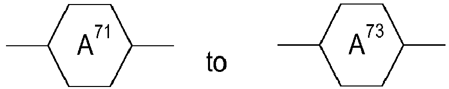 which is present denotes 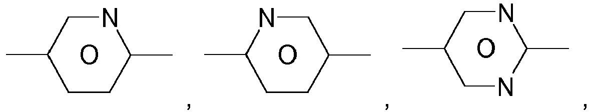 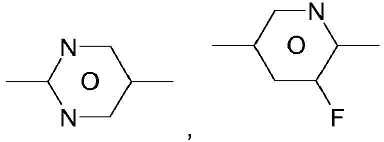 or 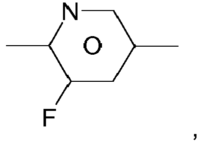 preferably 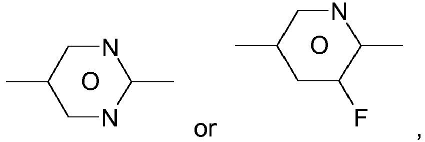 preferably 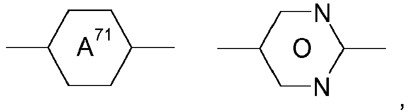 and the others have the same meaning or, independently of one another, denote 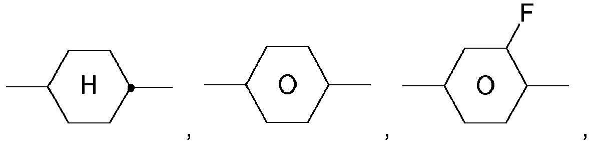 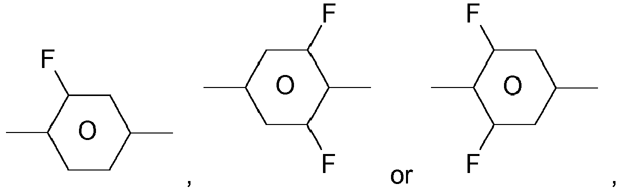 preferably 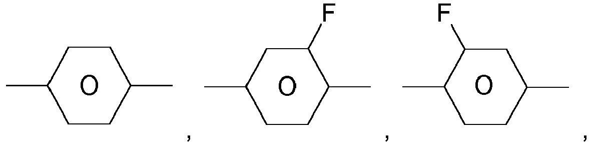 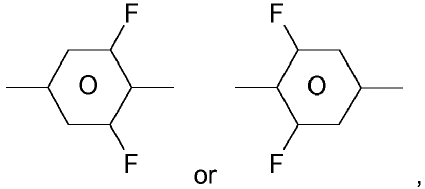
- Z⁷¹ and Z⁷²,: independently of one another, denote -CH₂CH₂-, -COO-, *trans*-CH=CH-*, trans*-CF=CF-, -CH₂O-, -CF₂O- or a single bond, preferably one or more of them denote(s) a single bond and very preferably both denote a single bond,
- t: denotes 0, 1 or 2, preferably 0 or 1, more preferably 1, and
- X⁷: has the meaning indicated for X² above under formula II or alternatively, independently of R⁷, may have one of the meanings indicated for R⁷.

The compounds of the formula VII are preferably dielectrically positive compounds.

In addition, the liquid-crystal media according to the present invention may comprise one or more compounds of the formula VIII 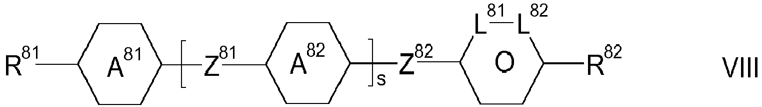 in which
- R⁸¹ and R⁸²,: independently of one another, have the meaning indicated for R² above under formula II, and 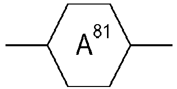 denotes 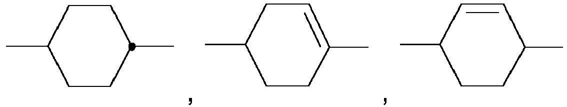 or 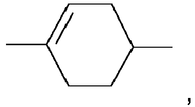 preferably 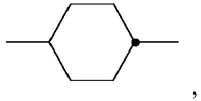 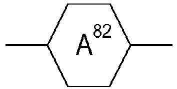 denotes 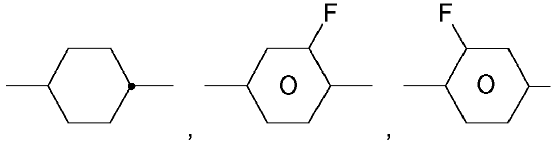 or 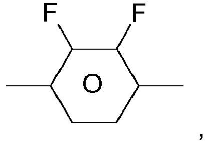
- Z⁸¹ and Z⁸²,: independently of one another, denote -CH₂CH₂-, -COO-, *trans*-CH=CH-*, trans*-CF=CF-, -CH₂O-, -CF₂O- or a single bond, preferably one or more of them denote(s) a single bond and very preferably both denote a single bond,
- L⁸¹ and L⁸²,: independently of one another, denote C-F or N, preferably one of L⁸¹ and L⁸² or both denote(s) C-F and very preferably both denote C-F, and
- s: denotes 0 or 1.

The compounds of the formula VIII are preferably dielectrically negative compounds.

The media according to the invention preferably comprise one or more compounds of the formula VIII, preferably selected from the group of the compounds of the formulae VIII-1 to VIII-3: 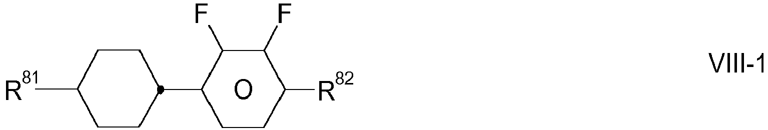 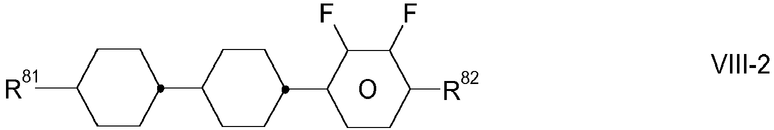 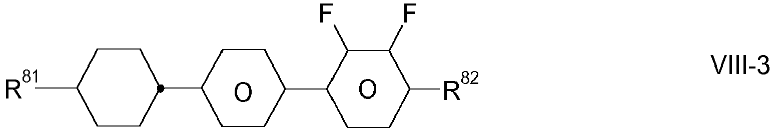 in which
- R⁸¹ and R⁸²: have the respective meanings indicated above under formula VIII.

In formulae VIII-1 to VIII-3, R⁸¹ preferably denotes n-alkyl or 1-*E*-alkenyl and R⁸² preferably denotes n-alkyl or alkoxy.

The liquid-crystalline media according to the present invention preferably comprise one or more compounds selected from the group of the compounds of the formulae I, IA, IB, IC and II to VIII, preferably of the formulae I, IA, IB, IC and II to VII and more preferably of the formulae I, IA, IB, IC and II, III and/or IV and/or VI. They particularly preferably predominantly consist of, even more preferably essentially consist of and very preferably entirely consist of these compounds.

In this application, "comprise" in connection with compositions means that the relevant entity, i.e. the medium or the component, comprises the component or components or compound or compounds indicated, preferably in a total concentration of 10 % or more and very preferably 20 % or more.

In this context, "predominantly consist of" means that the relevant entity comprises 55 % or more, preferably 60 % or more and very preferably 70 % or more of the component or components or the compound or compounds indicated.

In this context, "essentially consist of means that the relevant entity comprises 80 % or more, preferably 90 % or more and very preferably 95 % or more of the component or components or the compound or compounds indicated.

In this context, "virtually completely consist of" or "entirely consist of" means that the relevant entity comprises 98 % or more, preferably 99 % or more and very preferably 100.0 % of the component or components or the compound or compounds indicated.

The liquid-crystalline media according to the present application preferably comprise in total
1 to 20 %, preferably 2 to 15 %, and particularly preferably 3 to 8 % of compounds of the formula I,
5 to 30 %, preferably 10 to 25 % and particularly preferably 15 to 20 % of the compound of formula CV,
1 to 15 %, preferably 2 to 12 % and particularly preferably 3 to 8 % of compounds of the formula OT,
1 to 15 %, preferably 2 to 12 % and particularly preferably 3 to 10 % of the compound of the formula PV.

In a preferred embodiment of the present invention, the medium comprises one or more compounds of formula IA in a total concentration of 1 to 25 %, preferably 5 to 20 %, and particularly preferably 10 to 20 %.

In a preferred embodiment of the present invention, the medium comprises one or more compounds of formula IB in a total concentration of 1 to 20 %, preferably 2 to 15 %, and particularly preferably 3 to 10%.

In a preferred embodiment of the present invention, the medium comprises one or more compounds of formula IC in a total concentration of 1 to 20 %, preferably 5 to 15 %, and particularly preferably 7 to 12 %.

Preferably, the medium comprises one or more compounds of formula I and/or IA and/or IB and/or IC in a total concentration of 10 to 50 %, preferably 20 to 40 % and particularly preferably 25 to 35 %.

The compounds selected from the group of the formulae II and III are preferably used in a total concentration of 2 % to 60 %, more preferably 3 % to 35 %, even more preferably 4 % to 30 % and very preferably 5 % to 20 % of the mixture as a whole.

The compounds of the formula IV are preferably used in a total concentration of 1 % to 20 %, more preferably 2 % to 15 %, even more preferably 3 % to 12 % and very preferably 5 % to 10 % of the mixture as a whole.

The compounds of the formula V are preferably used in a total concentration of 0 % to 30 %, more preferably 0 % to 15 % and very preferably 1 % to 10 % of the mixture as a whole.

The compounds of the formula VI are preferably used in a total concentration of 0 % to 50 %, more preferably 1 % to 40 %, even more preferably 5 % to 30 % and very preferably 10 % to 20 % of the mixture as a whole.

The media according to the invention may optionally comprise further liquid-crystal compounds in order to adjust the physical properties. Such compounds are known to the person skilled in the art. Their concentration in the media according to the present invention is preferably 0 % to 30 %, more preferably 0.1 % to 20 % and very preferably 1 % to 15 %.

The liquid-crystal media preferably comprise in total 50 % to 100 %, more preferably 70 % to 98 % and very preferably 80 % to 95 % and in particular 90 % to 92 % of the compounds of the formulae I, CV, CP, OT, IA, IB, IC and II to VII, preferably selected from the group of the compounds of the formulae I, CV, CP, OT, IA and/or IB and/or IC and II to VI, particularly preferably of the formulae I, CV, CP, OT, IA and/or IB and/or IC and II to V, in particular of the formulae I, CV, CP, OT, IA and/or IB and/or IC and/or II, III, IV, V and VII and very particularly preferably of the formulae I, CV, CP, OT, IA and/or IB and/or IC and/or II, III, IV and V. They preferably predominantly consist of and very preferably virtually completely consist of these compounds. In a preferred embodiment, the liquid-crystal media in each case comprise one or more compounds of each of these formulae.

Preferably, the medium comprises one or compounds of formula CCQU-n-F in a total concentration of 5 to 20 %, preferably 8 to 18 %, particularly preferably 10 to 15 %.

Preferably, the medium comprises one or compounds of formula DPGU-n-F in a total concentration of 1 to 10 %, preferably 2 to 8 %, particularly preferably 3 to 6 %.

Preferably, the medium comprises one or compounds of formula CPGU-n-OT in a total concentration of 1 to 10 %, preferably 2 to 8 %, particularly preferably 3 to 6 %.

The acronyms used above and below are explained in tables A to D below.

Other mesogenic compounds which are not explicitly mentioned above can optionally and advantageously also be used in the media according to the present invention. Such compounds are known to the person skilled in the art.

The liquid-crystal media according to the present invention preferably have a clearing point of 90°C or more, more preferably 95°C or more, even more preferably 100°C or more, particularly preferably 105°C or more and very particularly preferably 110°C or more.

For the present invention a broad nematic phase range is advantageous and it preferably extends at least from -15°C or less to 80°C or more, more preferably at least from -20°C or less to 90°C or more, very preferably at least from -30°C or less to 100°C or more and in particular at least from -40°C or less to 105°C or more.

The Δε of the liquid-crystal medium according to the invention, at 1 kHz and 20°C, is preferably 2 or more, more preferably 4 or more and very preferably 6 or more. Δε is particularly preferably 25 or less and in some preferred embodiments 20 or less.

The Δn of the liquid-crystal media according to the present invention, at 589 nm (Na^{D}) and 20°C, is preferably in the range from 0.070 or more to 0.150 or less, more preferably in the range from 0.080 or more to 0.140 or less, even more preferably in the range from 0.090 or more to 0.135 or less and very particularly preferably in the range from 0.100 or more to 0.130 or less.

In a preferred embodiment of the present application, the Δn of the liquid-crystal media according to the present invention is preferably 0.080 or more, more preferably 0.090 or more.

In this preferred embodiment of the present invention, the Δn of the liquid-crystal media is preferably in the range from 0.090 or more to 0.120 or less, more preferably in the range from 0.095 or more to 0.115 or less and very particularly preferably in the range from 0.100 or more to 0.110 or less, while Δε is preferably in the range of from 7 to 25, preferably in the range of from 10 to 22, more preferably in the range of from 13 to 20 and particularly preferably in the range of from 15 to 18.

The present invention further relates to a process for the fabrication of a liquid crystal display using the ODF process, the process comprising at least the steps: forming a sealant on a first panel; dropping liquid crystal on the first panel to form a plurality of liquid crystal dots; and assembling a second panel with the first panel, wherein the first and the second panels have a plurality of pixel areas.

It was found that the appearance of drop mura can be avoided by fine tuning the contact angle of the individual drops of liquid crystal media according to the invention, on the substrate.

In particular, the contact angle of a liquid crystal droplet on the display surface changes with the individual concentrations of the mixture components of the formulae CV, PV and OT.

For the avoidance of drop mura it was observed that it is beneficial to keep the concentration of the compound of formula CV at 30 % or less.

The contact angle will be higher with increasing concentrations of the compound of formula PV and decreasing concentrations of compounds of the formula OT.

The contact angle will be lower with decreasing concentrations of the compound of formula CP and increasing concentrations of compounds of formula OT in the medium.

Hence, the contact angle can be either decreased or increased by variation of the concentration of the mixture components of the formulae CV, PV and OT depending on the particular requirements of the process.

In a preferred embodiment of the present invention, the concentration of the compound of formula IV-5-1 in the medium used is 8 % or more.

It is further preferred that the concentration of the compound of formula OT in the medium used is 6 % or less.

In another preferred embodiment of the present invention, the concentration of the compound of formula OT in the medium used is 4 % or more and the concentration of IV-5-1 is 9 % or less.

Further preferred embodiments of the present invention are as follows (the compounds are abbreviated using the acronyms explained below in tables A to D):
- the medium comprises a compound of formula DPGU-n-F, preferably DPGU-4-F,
   and/or
- the medium comprises a compound of the formula APUQU-n-F, preferably selected from the compounds APUQU-2-F and APUQU-3-F,
   and/or
- the medium comprises a compound of the formula CDUQU-n-F, preferably CDUQU-3-F,
   and/or
- the medium comprises one or more compounds of the formula DGUQU-n-F, preferably DGUQU-4-F,
   and/or
- the medium comprises one or more compounds of the formula CPGU-n-OT, preferably CPGU-3-OT.

### Preferably,

- the medium comprises one or more compounds of the formula APUQU-n-F in a total concentration in the range of from 2 % to 25%, more preferably from 8 % to 20 % and particularly preferably from 12 % to 16 %,
- the medium comprises one or more compounds of the formula CDUQU-n-F in a total concentration in the range of from 1 % to 20%, more preferably from 5 % to 15 % and particularly preferably from 8 % to 12%,
- the medium comprises one or more compounds of the formula DGUQU-n-F in a total concentration in the range of from 1 % to 15%, more preferably from 2 % to 10 % and particularly preferably from 3 % to 8 %,
- the medium comprises one or more compounds of the formula DPGU-n-F in a total concentration in the range of from 1 % to 15%, more preferably from 2 % to 10 % and particularly preferably from 3 % to 8 %,
- the medium comprises one or more compounds of the formula APUQU-n-F and one or more compounds of the formula CDUQU-n-F in a total concentration in the range of from 10 % to 35%, more preferably from 15 % to 30 % and particularly preferably from 18 % to 24 %,
- the medium comprises one or more compounds of the formula APUQU-n-F and one or more compounds of the formula CDUQU-n-F and one or more compounds of the formula DGUQU-n-F in a total concentration in the range of from 15 % to 40%, more preferably from 20 % to 35 % and particularly preferably from 24 % to 28 %.

The present invention further relates to a liquid crystal display obtainable by the process described above using a medium according to the present invention.

Preferable, the display according to the invention is addressed by an active matrix.

In the present application, the expression dielectrically positive describes compounds or components where Δε > 3.0, dielectrically neutral describes those where -1.5 ≤ Δε ≤ 3.0 and dielectrically negative describes those where Δε < -1.5. Δε is determined at a frequency of 1 kHz and at 20°C. The dielectric anisotropy of the respective compound is determined from the results of a solution of 10 % of the respective individual compound in a nematic host mixture. If the solubility of the respective compound in the host mixture is less than 10 %, the concentration is reduced to 5 %. The capacitances of the test mixtures are determined both in a cell having homeotropic alignment and in a cell having homogeneous alignment. The cell thickness of both types of cells is approximately 20 µm. The voltage applied is a rectangular wave having a frequency of 1 kHz and an effective value of typically 0.5 V to 1.0 V, but it is always selected to be below the capacitive threshold of the respective test mixture.

Δε is defined as (ε_{∥} - ε⊥), while ε_{av.} is (ε_{∥} + 2 ε_{⊥}) / 3.

The host mixture used for dielectrically positive compounds is mixture ZLI-4792 and that used for dielectrically neutral and dielectrically negative compounds is mixture ZLI-3086, both from Merck KGaA, Germany. The absolute values of the dielectric constants of the compounds are determined from the change in the respective values of the host mixture on addition of the compounds of interest. The values are extrapolated to a concentration of the compounds of interest of 100 %.

Components having a nematic phase at the measurement temperature of 20°C are measured as such, all others are treated like compounds.

The expression threshold voltage in the present application refers to the optical threshold and is quoted for 10 % relative contrast (V₁₀), and the expression saturation voltage refers to the optical saturation and is quoted for 90 % relative contrast (V₉₀), in both cases unless expressly stated otherwise. The capacitive threshold voltage (V₀), also called the Freedericks threshold (V_{Fr}), is only used if expressly mentioned.

The ranges of the parameters indicated in this application all include the limit values, unless expressly stated otherwise.

The different upper and lower limit values indicated for various ranges of properties in combination with one another give rise to additional preferred ranges.

Throughout this application, the following conditions and definitions apply, unless expressly stated otherwise. All concentrations are indicated in per cent by weight and relate to the respective mixture as a whole, all temperatures are quoted in degrees Celsius and all temperature differences are quoted in differential degrees. All physical properties are determined in accordance with "Merck Liquid Crystals, Physical Properties of Liquid Crystals", Status Nov. 1997, Merck KGaA, Germany and are quoted for a temperature of 20°C, unless expressly stated otherwise. The optical anisotropy (Δn) is determined at a wavelength of 589.3 nm. The dielectric anisotropy (Δε) is determined at a frequency of 1 kHz. The threshold voltages, as well as all other electro-optical properties, are determined using test cells produced at Merck KGaA, Germany. The test cells for the determination of Δε have a cell thickness of approximately 20 µm. The electrode is a circular ITO electrode having an area of 1.13 cm² and a guard ring. The orientation layers are SE-1211 from Nissan Chemicals, Japan, for homeotropic orientation (ε_{∥}) and polyimide AL-1054 from Japan Synthetic Rubber, Japan, for homogeneous orientation (ε_{⊥}). The capacitances are determined using a Solatron 1260 frequency response analyser using a sine wave with a voltage of 0.3 Vᵣₘₛ. The light used in the electro-optical measurements is white light. A set-up using a commercially available DMS instrument from Autronic-Melchers, Germany, is used here. The characteristic voltages have been determined under perpendicular observation. The threshold (V₁₀), mid-grey (V₅₀) and saturation (V₉₀) voltages have been determined for 10 %, 50 % and 90 % relative contrast, respectively.

The liquid-crystal media according to the present invention may comprise further additives and chiral dopants in the usual concentrations. The total concentration of these further constituents is in the range from 0 % to 10 %, preferably 0.1 % to 6 %, based on the mixture as a whole. The concentrations of the individual compounds used are each preferably in the range from 0.1 % to 3 %. The concentration of these and similar additives is not taken into consideration when quoting the values and concentration ranges of the liquid-crystal components and compounds of the liquid-crystal media in this application.

The liquid-crystal media according to the invention consist of a plurality of compounds, preferably 3 to 30, more preferably 4 to 20 and very preferably 4 to 16 compounds. These compounds are mixed in a conventional manner. In general, the desired amount of the compound used in the smaller amount is dissolved in the compound used in the larger amount. If the temperature is above the clearing point of the compound used in the higher concentration, it is particularly easy to observe completion of the dissolution process. It is, however, also possible to prepare the media in other conventional ways, for example using so-called pre-mixes, which can be, for example, homologous or eutectic mixtures of compounds, or using so-called "multibottle" systems, the constituents of which are themselves ready-to-use mixtures.

By addition of suitable additives, the liquid-crystal media according to the present invention can be modified in such a way that they can be used in all known types of liquid-crystal displays, either using the liquid-crystal media as such, such as TN, TN-AMD, ECB-AMD, VAN-AMD, IPS-AMD, FFS-AMD LCDs, or in composite systems, such as PDLC, NCAP, PN LCDs and especially in ASM-PA LCDs.

All temperatures, such as, for example, the melting point T(C,N) or T(C,S), the transition from the smectic (S) to the nematic (N) phase T(S,N) and the clearing point T(N,I) of the liquid crystals, are quoted in degrees Celsius. All temperature differences are quoted in differential degrees.

In the present invention and especially in the following examples, the structures of the mesogenic compounds are indicated by means of abbreviations, also called acronyms. In these acronyms, the chemical formulae are abbreviated as follows using Tables A to C below. All groups CₙH₂ₙ₊₁, CₘH₂ₘ₊₁ and CₗH₂ₗ₊₁ or CₙH₂ₙ₋₁, CₘH₂ₘ₋₁ and CₗH₂ₗ₋₁ denote straight-chain alkyl or alkenyl, preferably 1E-alkenyl, each having n, m and I C atoms respectively. Table A lists the codes used for the ring elements of the core structures of the compounds, while Table B shows the linking groups. Table C gives the meanings of the codes for the left-hand or right-hand end groups. The acronyms are composed of the codes for the ring elements with optional linking groups, followed by a first hyphen and the codes for the left-hand end group, and a second hyphen and the codes for the right-hand end group. Table D shows illustrative structures of compounds together with their respective abbreviations.

**Table A: Ring elements**

| | | | |
|---|---|---|---|
| **C** | 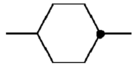 | **P** | 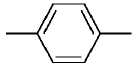 |
| **D** | 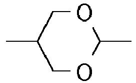 | **DI** | 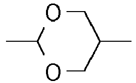 |
| **A** | 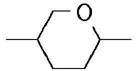 | **AI** | 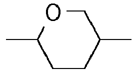 |
| **G** | 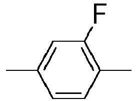 | **GI** | 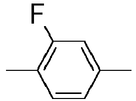 |
| **U** | 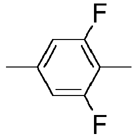 | **UI** | 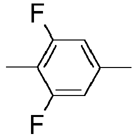 |
| **Y** | 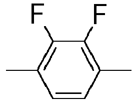 | | |
| **M** | 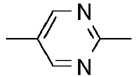 | **MI** | 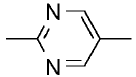 |
| **N** | 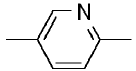 | **NI** | 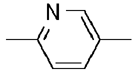 |
| **nf** | 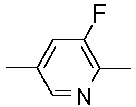 | **nfl** | 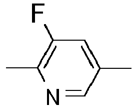 |
| **np** | 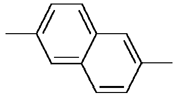 | **dH** | 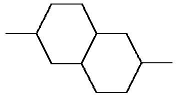 |
| **n3f** | 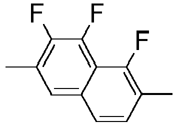 | **n3fl** | 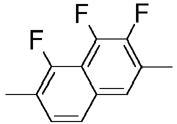 |
| **n2f** | 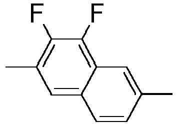 | **n2fl** | 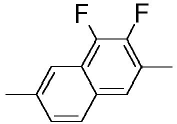 |
| **th** | 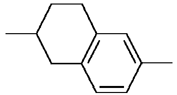 | **thI** | 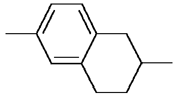 |
| **th2f** | 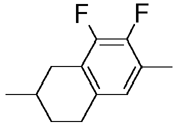 | **th2fl** | 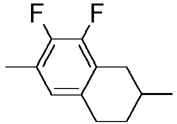 |
| **K** | 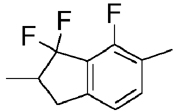 | **KI** | 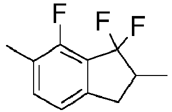 |
| L | 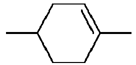 | **LI** | 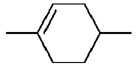 |
| **F** | 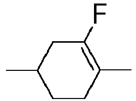 | **FI** | 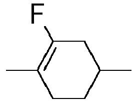 |

**Table B: Linking groups**

| | | | |
|---|---|---|---|
| **E** | -CH₂CH₂- | **Z** | -CO-O- |
| **V** | -CH=CH- | **ZI** | -O-CO- |
| **X** | -CF=CH- | **O** | -CH₂-O- |
| **XI** | -CH=CF- | **OI** | -O-CH₂- |
| **B** | -CF=CF- | **Q** | -CF₂-O- |
| **T** | -C≡C- | **QI** | -O-CF₂- |
| **W** | -CF₂CF₂- | **T** | -C≡C- |

**Table C: End groups**

| **Left-hand side** | | **Right-hand side** | |
|---|---|---|---|
| **Use alone** | | | |
| **-n-** | CₙH₂ₙ₊₁- | **-n** | --CₙH₂ₙ₊₁ |
| **-nO-** | CₙH₂ₙ₊₁-O- | **-nO** | -O-CₙH₂ₙ₊₁ |
| **-V-** | OCH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ₊₁- | **-Vn** | -CH=CH-CₙH₂ₙ₊₁ |
| **-nVm-** | CₙH₂ₙ₊₁-CH=CH-CₘH₂ₘ- | **-nVm** | -CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O- | **-OM** | -OCFH₂ |
| **-DO-** | CF₂HO- | **-OD** | -OCF₂H |
| **-TO-** | CF₃O- | **-OT** | -OCF₃ |
| **-OXF-** | CF₂=CH-O- | **-OXF** | -O-CH=CF₂ |
| **-A-** | H-C≡C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |

| | **Use together with one another and with others** | | |
|---|---|---|---|
| **-...A...-** | -C≡C- | **-...A...** | -C≡C- |
| **-...V...-** | CH=CH- | **-...V...** | -CH=CH- |
| **-...Z...-** | -CO-O- | -...Z... | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

in which n and m each denote integers, and the three dots "..." are place-holders for other abbreviations from this table.

The following table shows illustrative structures together with their respective abbreviations. These are shown in order to illustrate the meaning of the rules for the abbreviations. They furthermore represent compounds which are preferably used.

**Table D: Illustrative structures**

| |
|---|
| 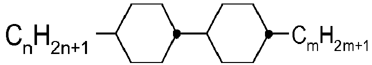 |
| **CC-n-m** |
| 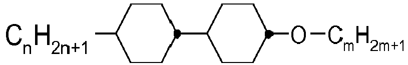 |
| **CC-n-Om** |
| 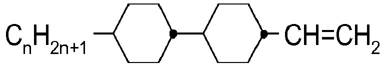 |
| **CC-n-V** |
| 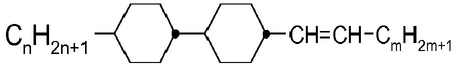 |
| **CC-n-Vm** |
| 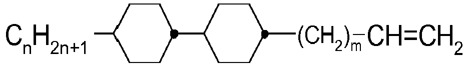 |
| **CC-n-mV** |
| 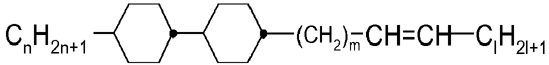 |
| **CC-n-mVI** |
| 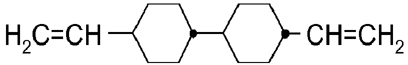 |
| **CC-V-V** |
| 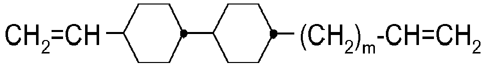 |
| **CC-V-mV** |
| 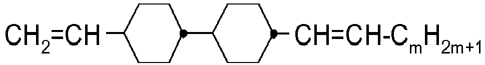 |
| **CC-V-Vm** |
| 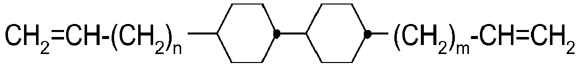 |
| **CC-Vn-mV** |
| 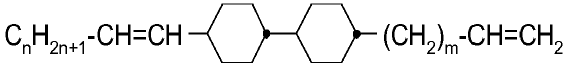 |
| **CC-nV-mV** |
| 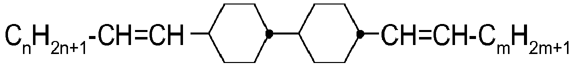 |
| **CC-nV-Vm** |
| 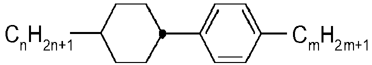 |
| **CP-n-m** |
| 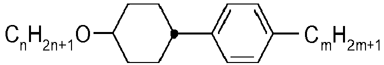 |
| **CP-nO-m** |
| 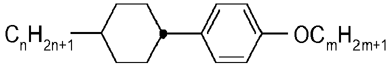 |
| **CP-n-Om** |
| 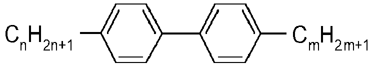 |
| **PP-n-m** |
| 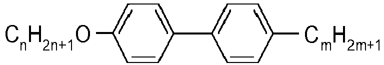 |
| **PP-nO-m** |
| 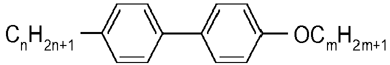 |
| **PP-n-Om** |
| 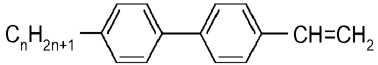 |
| **PP-n-V** |
| 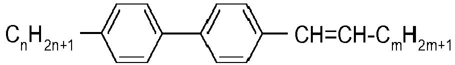 |
| **PP-n-Vm** |
| 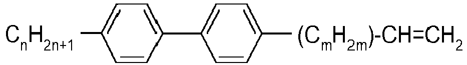 |
| **PP-n-mV** |
| 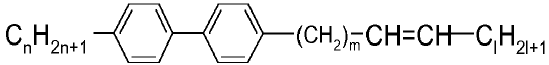 |
| **PP-n-mVl** |
| 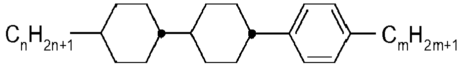 |
| **CCP-n-m** |
| 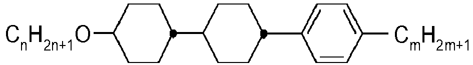 |
| **CCP-nO-m** |
| 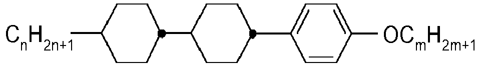 |
| **CCP-n-Om** |
| 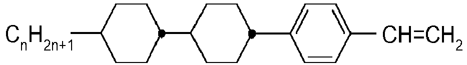 |
| **CCP-n-V** |
| 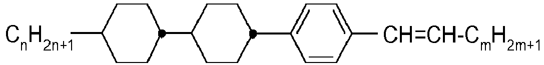 |
| **CCP-n-Vm** |
| 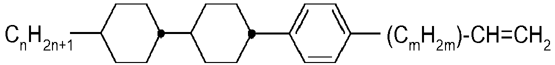 |
| **CCP-n-mV** |
| 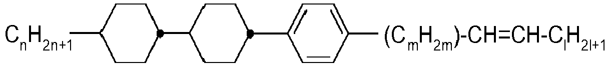 |
| **CCP-n-mVl** |
| 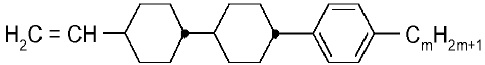 |
| **CCP-V-m** |
| 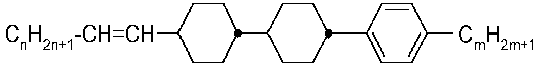 |
| **CCP-nV-m** |
| 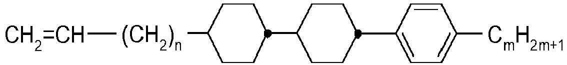 |
| **CCP-Vn-m** |
| 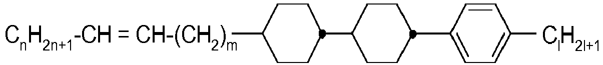 |
| **CCP-nVm-l** |
| 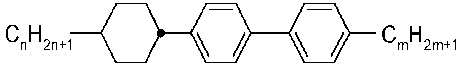 |
| **CPP-n-m** |
| 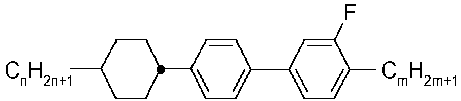 |
| **CPG-n-m** |
| 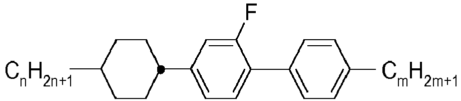 |
| **CGP-n-m** |
| 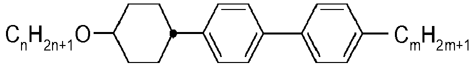 |
| **CPP-nO-m** |
| 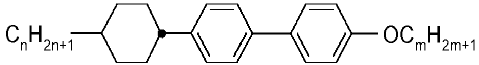 |
| **CPP-n-Om** |
| 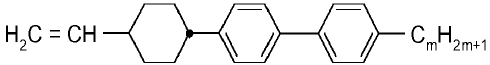 |
| **CPP-V-m** |
| 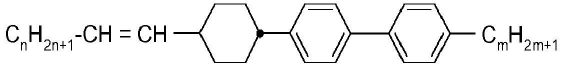 |
| **CPP-nV-m** |
| 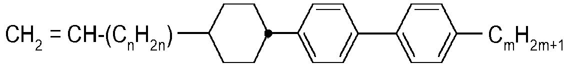 |
| **CPP-Vn-m** |
| 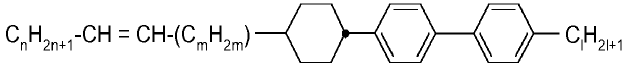 |
| **CPP-nVm-l** |
| 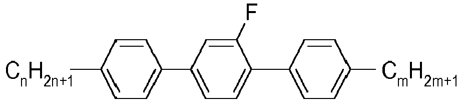 |
| **PGP-n-m** |
| 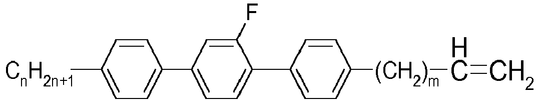 |
| **PGP-n-mV** |
| 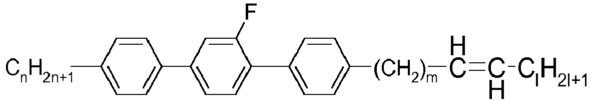 |
| **PGP-n-mVl** |
| 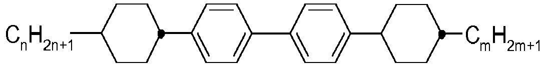 |
| **CPPC-n-m** |
| 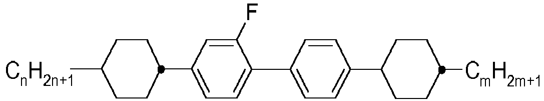 |
| **CGPC-n-m** |
| 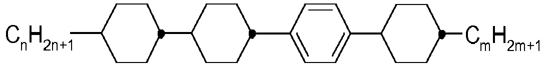 |
| **CCPC-n-m** |
| 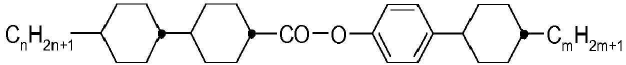 |
| **CCZPC-n-m** |
| 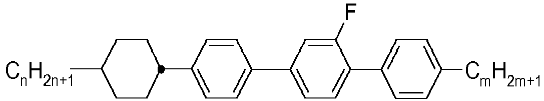 |
| **CPGP-n-m** |
| 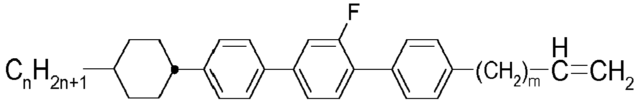 |
| **CPGP-n-mV** |
| 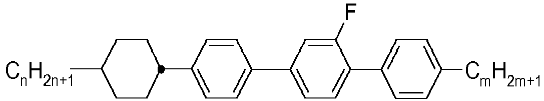 |
| 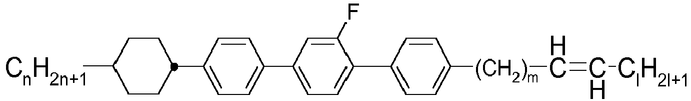 |
| **CPGP-n-mVl** |
| 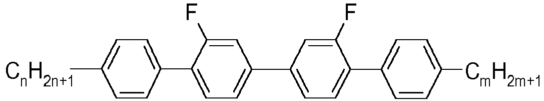 |
| **PGIGP-n-m** |
| 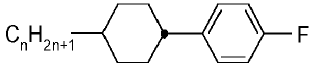 |
| **CP-n-F** |
| 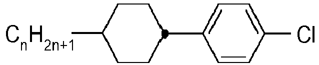 |
| **CP-n-CL** |
| 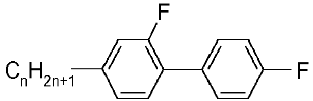 |
| **GP-n-F** |
| 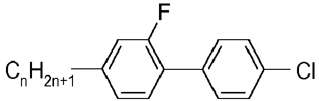 |
| **GP-n-CL** |
| 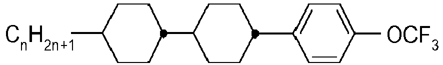 |
| **CCP-n-OT** |
| 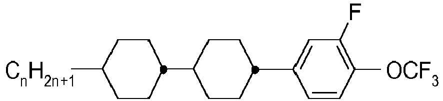 |
| **CCG-n-OT** |
| 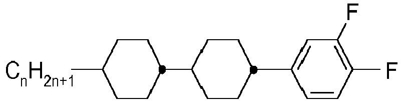 |
| **CCG-n-F** |
| 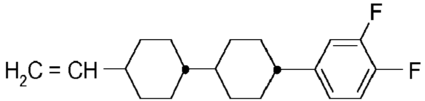 |
| **CCG-V-F** |
| 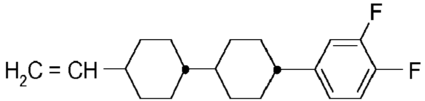 |
| **CCG-V-F** |
| 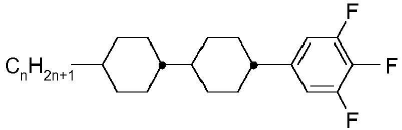 |
| **CCU-n-F** |
| 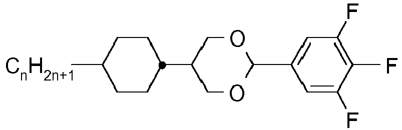 |
| **CDU-n-F** |
| 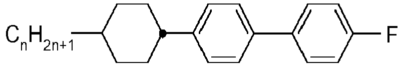 |
| **CPP-n-F** |
| 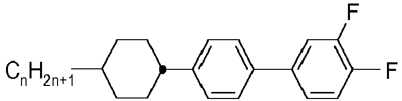 |
| **CPG-n-F** |
| 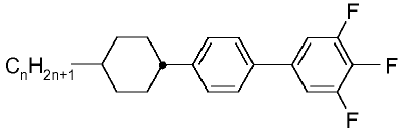 |
| **CPU-n-F** |
| 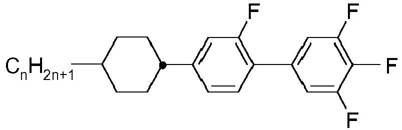 |
| **CGU-n-F** |
| 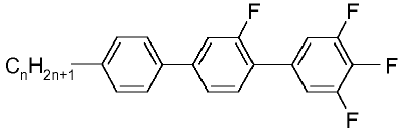 |
| **PGU-n-F** |
| 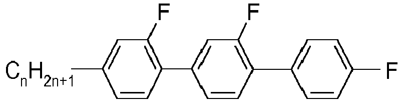 |
| **GGP-n-F** |
| 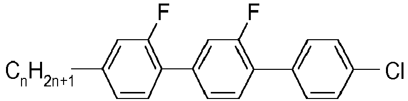 |
| **GGP-n-CL** |
| 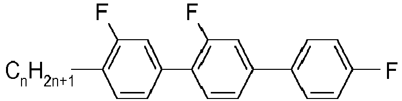 |
| **PGIGI-n-F** |
| 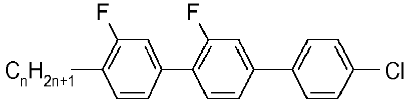 |
| **PGIGI-n-CL** |
| 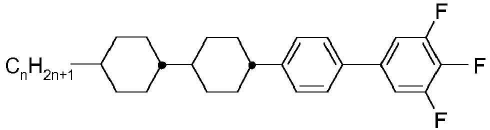 |
| **CCPU-n-F** |
| 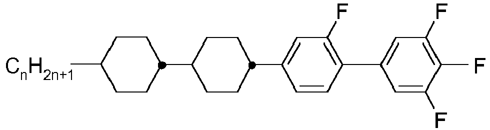 |
| **CCGU-n-F** |
| 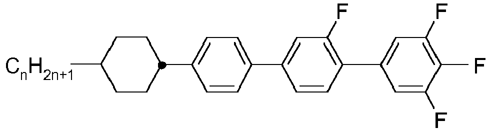 |
| **CPGU-n-F** |
| 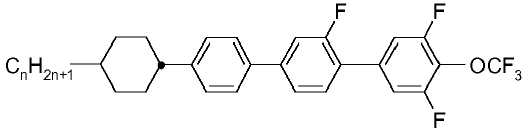 |
| **CPGU-n-OT** |
| 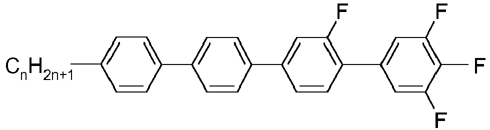 |
| **PPGU-n-F** |
| 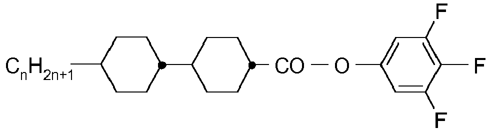 |
| **CCZU-n-F** |
| 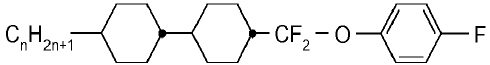 |
| **CCQP-n-F** |
| 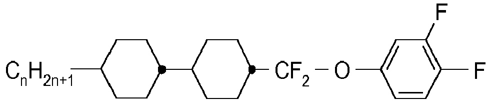 |
| **CCQG-n-F** |
| 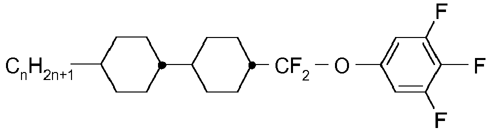 |
| **CCQU-n-F** |
| 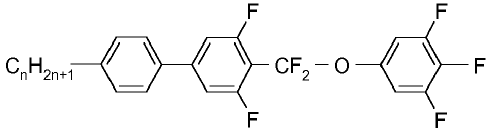 |
| **PUQU-n-F** |
| 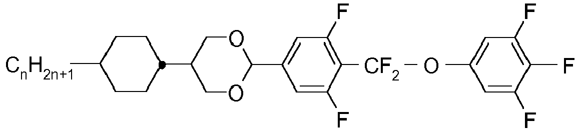 |
| **CDUQU-n-F** |
| 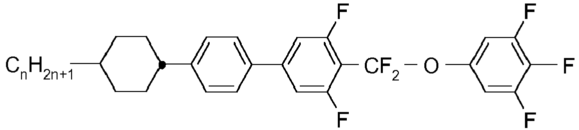 |
| **CPUQU-n-F** |
| 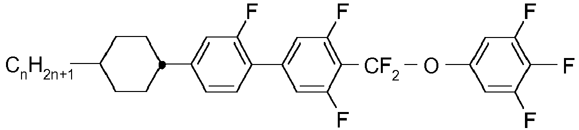 |
| **CGUQU-n-F** |
| 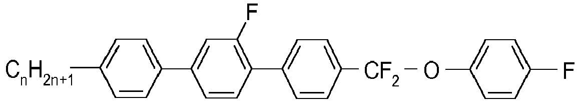 |
| **PGPQP-n-F** |
| 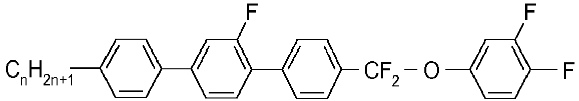 |
| **PGPQG-n-F** |
| 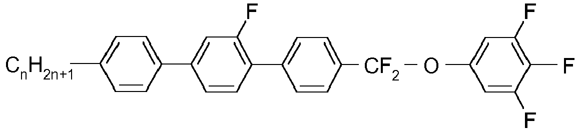 |
| **PGPQU-n-F** |
| 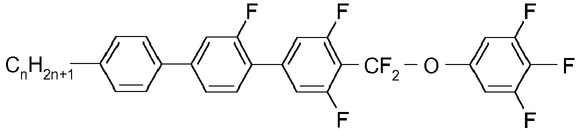 |
| **PGUQU-n-F** |
| 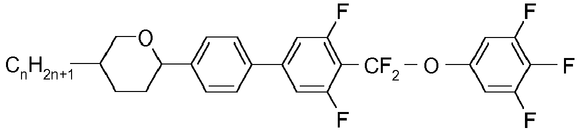 |
| **APUQU-n-F** |
| 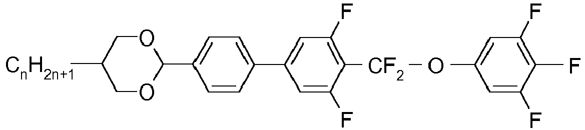 |
| **DPUQU-n-F** |
| 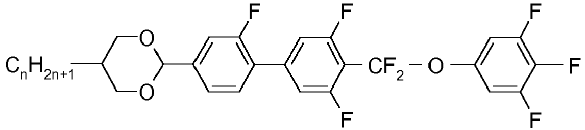 |
| **DGUQU-n-F** |
| 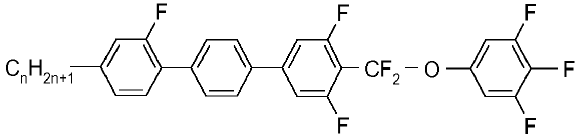 |
| **GPUQU-n-F** |
| 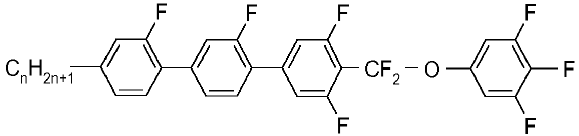 |
| **GGUQU-n-F** |
| 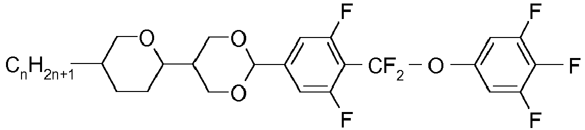 |
| **ADUQU-n-F** |
| 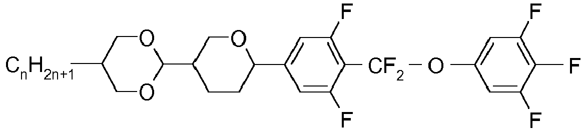 |
| **DAUQU-n-F** |

The following table, Table E, shows illustrative compounds which can be used as stabiliser in the mesogenic media according to the present invention.

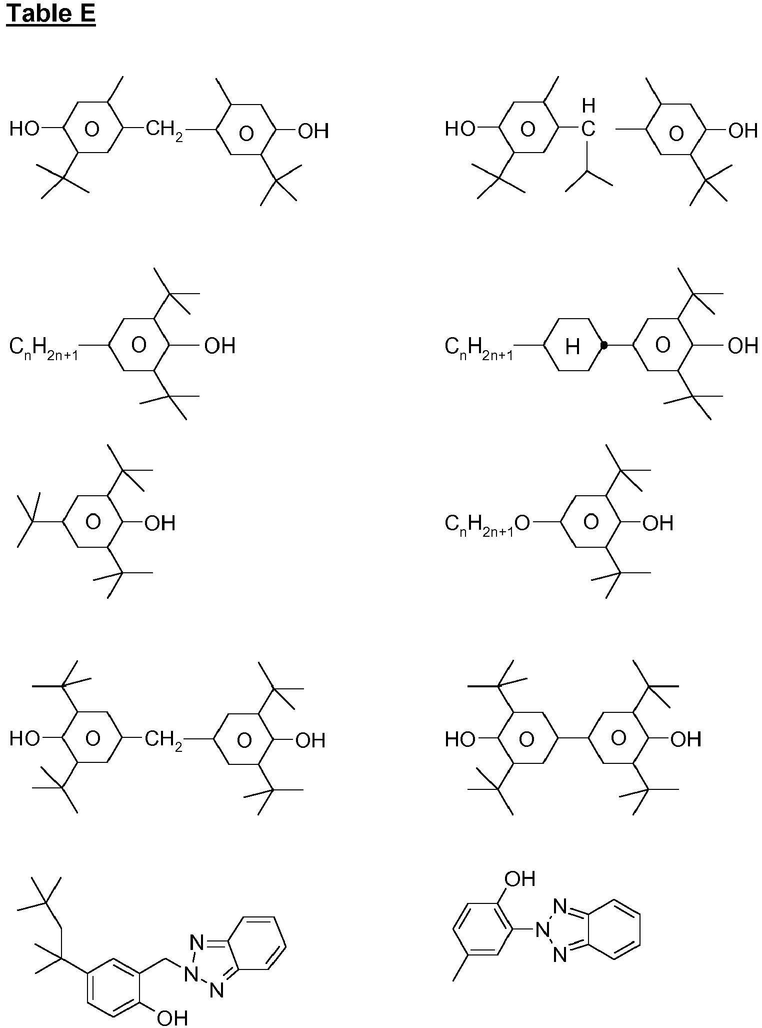

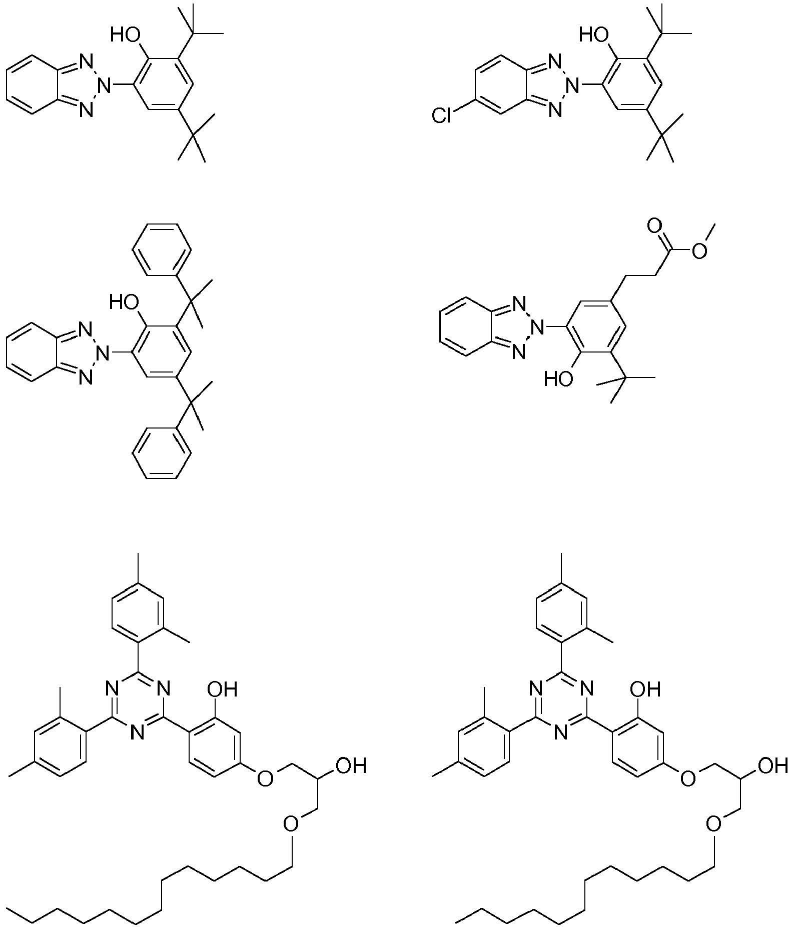

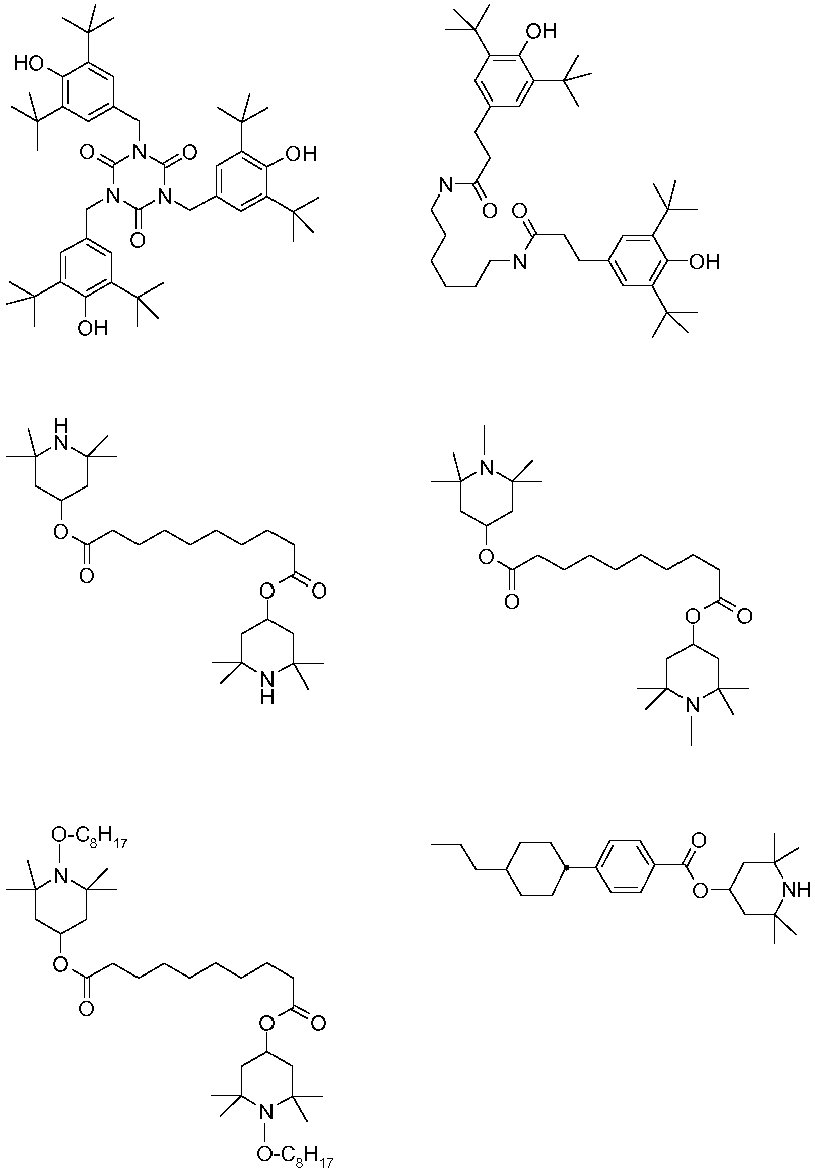

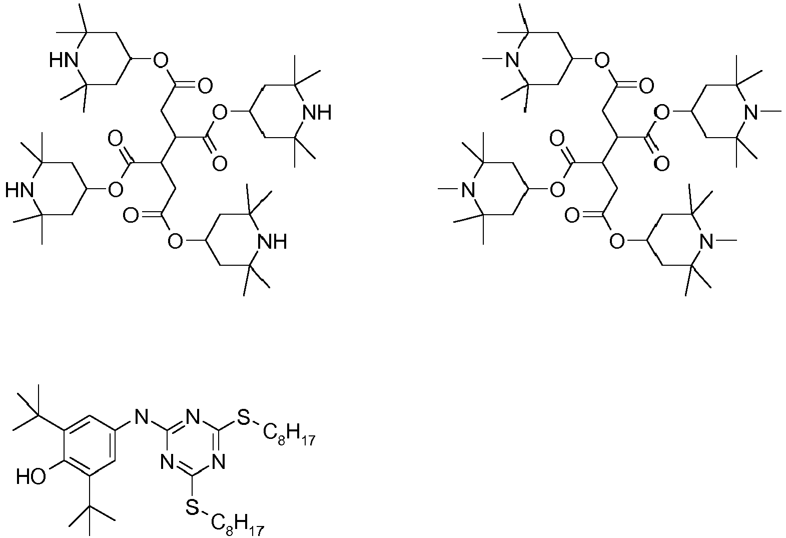

In a preferred embodiment of the present invention, the mesogenic media comprise one or more compounds selected from the group of the compounds from Table E.

The following table, Table F, shows illustrative compounds which can preferably be used as chiral dopants in the mesogenic media according to the present invention.

**Table F**

| |
|---|
| 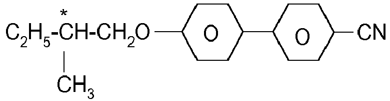 |
| **C 15** |
| 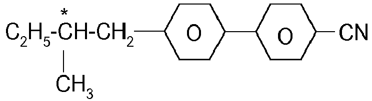 |
| **CB 15** |
| 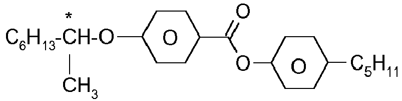 |
| **CM 21** |
| 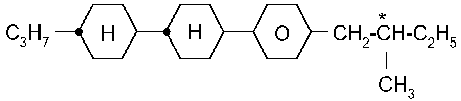 |
| **CM 44** |
| 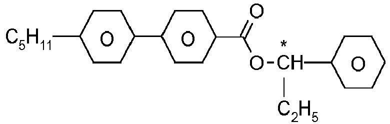 |
| **CM 45** |
| 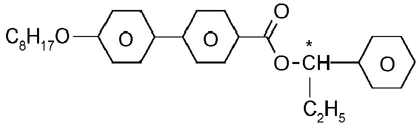 |
| **CM 47** |
| 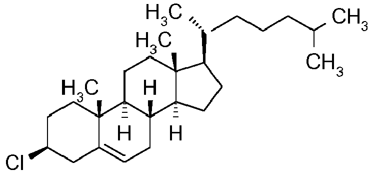 |
| **CC** |
| 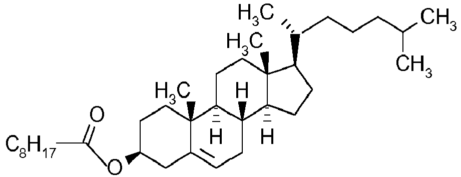 |
| **CN** |
| 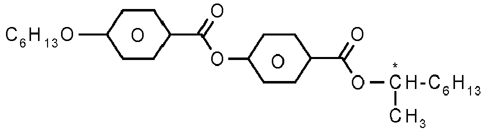 |
| **R/S-811** |
| 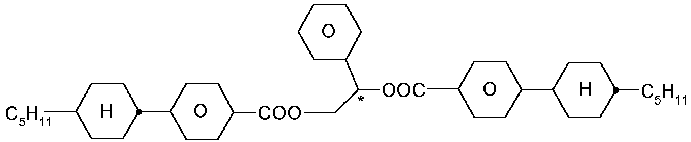 |
| **R/S-1011** |
| 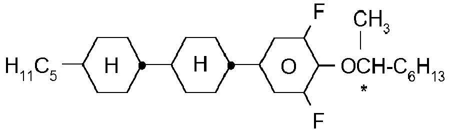 |
| **R/S-2011** |
| 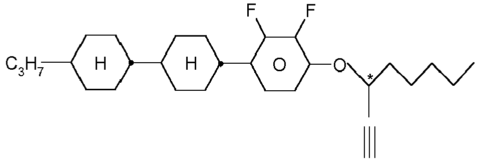 |
| **R/S-3011** |
| 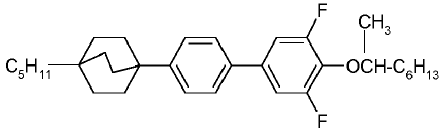 |
| **R/S-4011** |
| 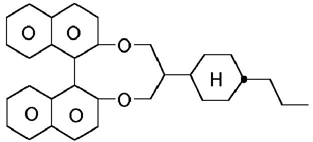 |
| **R/S-5011** |

In a preferred embodiment of the present invention, the mesogenic media comprise one or more compounds selected from the group of the compounds from Table F.

The mesogenic media according to the present application preferably comprise two or more, preferably four or more, compounds selected from the group consisting of the compounds from the above tables.

The liquid-crystal media according to the present invention preferably comprise
- seven or more, preferably eight or more, compounds, preferably compounds having three or more, preferably four or more, different formulae, selected from the group of the compounds from Table D.

### Examples

The examples below illustrate the present invention without limiting it in any way.

However, the physical properties show the person skilled in the art what properties can be achieved and in what ranges they can be modified. In particular, the combination of the various properties which can preferably be achieved is thus well defined for the person skilled in the art.

Liquid-crystal mixtures having the composition and properties as indicated in the following tables are prepared.

### Comparative Mixture Example CM1

| | | | |
|---|---|---|---|
| CC-3-V | 31.5 % | T_{(N,I)} [°C]: | 110 |
| CCP-V-1 | 8.0 % | Δn | 0.1087 |
| CCGU-3-F | 7.0 % | nₑ | 1.5867 |
| CCQU-3-F | 10.0 % | Δε: | 16.7 |
| CPGU-3-OT | 6.0 % | εₗₗ: | 20.6 |
| CCP-3-OT | 2.5 % | γ₁ [mPa·s]: | 143 |
| APUQU-2-F | 6.0 % | k₁₁ | 15.2 |
| APUQU-3-F | 9.0 % | k₃₃ | 16.4 |
| PGUQU-3-F | 1.0 % | | |
| CDUQU-3-F | 10.0 % | | |
| DPGU-4-F | 5.0 % | | |
| DGUQU-4-F | 4.0 % | | |

### Comparative Mixture Example CM2

| | | | |
|---|---|---|---|
| APUQU-2-F | 6.0 % | T_{(N,I)} [°C]: | 109.5 |
| APUQU-3-F | 9.0 % | Δn | 0.1090 |
| CCGU-3-F | 7.5 % | nₑ | 1.5875 |
| CDUQU-3-F | 10.5 % | Δε: | 16.8 |
| CPGU-3-OT | 5.5 % | ε_{∥}: | 20.7 |
| DGUQU-4-F | 5.0 % | γ₁ [mPa·s]: | 141 |
| DPGU-4-F | 6.0 % | k₁₁ | 15.5 |
| CCP-3-OT | 2.5 % | k₃₃ | 16.3 |
| CCP-V-1 | 8.0 % | | |
| CCQU-3-F | 7.0 % | | |
| CC-3-V | 33.0 % | | |

### Mixture Example M1

| | | | |
|---|---|---|---|
| APUQU-2-F | 6.0 % | T_{(N,I)} [°C]: | 111 |
| APUQU-3-F | 8.0 % | Δn | 0.1065 |
| CCGU-3-F | 6.0 % | nₑ | 1.5870 |
| CDUQU-3-F | 10.0 % | Δε: | 17.5 |
| CPGU-3-OT | 2.5 % | ε_{∥} : | 21.4 |
| DGUQU-4-F | 4.0 % | γ₁ [mPa·s]: | 149 |
| DPGU-4-F | 5.0 % | k₁₁ [pN] | 15.6 |
| PGUQU-3-F | 4.0 % | k₃₃ [pN] | 16.5 |
| CCP-3-OT | 3.5 % | | |
| CCP-V-1 | 10.0 % | | |
| CCQU-3-F | 12.0 % | | |
| CC-3-V | 26.0 % | | |
| CC-3-V1 | 3.0 % | | |

### Mixture Example M2

| | | | |
|---|---|---|---|
| APUQU-2-F | 7.0 % | T_{(N,I)} [°C]: | 109 |
| APUQU-3-F | 8.0 % | Δn | 0.1082 |
| CCGU-3-F | 6.0 % | nₑ | 1.5835 |
| CDUQU-3-F | 3.5 % | Δε: | 16.9 |
| CPGU-3-OT | 2.5 % | ε_{∥} : | 20.8 |
| DGUQU-4-F | 6.0 % | γ₁ [mPa·s]: | 149 |
| DPGU-4-F | 4.0 % | k₁₁ [pN] | 15.0 |
| PGUQU-3-F | 1.5 % | k₃₃ [pN] | 16.2 |
| CCP-3-OT | 8.0 % | | |
| CCU-3-F | 6.0 % | | |
| CCP-V-1 | 2.5 % | | |
| CCQU-3-F | 12.0 % | | |
| CC-3-V | 24.5 % | | |
| CC-3-V1 | 4.5 % | | |

The contact angle is the angle where a liquid-vapor interface meets a solid surface. For each of the mixtures described above the contact angle of the liquid crystal is measured on Parafilm-M®.

Parafilm-M® is available from Bemis Company, Inc., Oshkosh, WI, U.S.A., having the following characteristics:
Parafilm M® All-Purpose Laboratory Film,(#PM996),
Permeability Characteristics:
Oxygen (ASTM 1927-98): 150 cc/m² d at 23°C and 50% RH
Carbon Dioxide (Modulated IR Method): 1200 cc/m² d at 23°C and 0% RH Water Vapour (ASTM F1249-01): Flat: 1 g/m² d at 38°C and 90% RH.

The contact angle (α_{con}) is measured using a "Drop Shape Analyzer", Model DSA100 (Krüss GmbH, Hamburg, Germany). A small droplet of liquid crystal is dispensed onto the substrate (Parafilm) by means of a syringe and the contact angle is measured with the circle fitting method.

The following results are obtained for the comparative mixture examples CM1 and CM2, and the mixture examples M1 and M2, all of which contain the compound of formula CV (CC-3-V), the compound of formula PV (CCP-V-1) and a compound of formula OT (CCP-3-OT):

| Mixture | Concentration [%] | | | contact angle α_{con} [°] | Mura |
|---|---|---|---|---|---|
| | CC-3-V | CCP-V-1 | CCP-3-OT | | |
| CM1 | 31.5 | 8.0 | 2.5 | 43.8 | × |
| CM2 | 33.0 | 8.0 | 2.5 | 43.8 | × |
| M1 | 26.0 | 10.0 | 3.5 | 44.7 | ○ |
| M2 | 24.5 | 2.5 | 8.0 | 43.0 | N/A |

| | | | | | |
|---|---|---|---|---|---|
| N/A not applicable × not good (drop mura observed) ○ good (no drop mura observed) | | | | | |

As can be seen, for the comparative mixture examples CM1 and CM2, containing both 8 % of CCP-V-1 and 2.5 % of CCP-3-OT and a very similar amount of CC-3-V of 31.5 % and 33 %, respectively, the contact angle is the same (α_{con} = 43.8°). Both mixtures CM1 and CM2 show drop mura (chess pattern) in test panels. The reduction of the amount of CC-3-V to 26 % and increase of the concentration of CCP-V-1 to 10 % in mixture M1 results in an increase of the contact angle by almost 1° to 44.7° (α_{con} = 44.7° for mixture M1). Mixture M1 does not show drop mura (chess pattern) in a test panel as used with CM1 or CM2.

A lower contact angle can be achieved by significantly reducing the amount of CCP-V-1 to 2.5 % in combination with a significant increase in the concentration of CCP-3-OT (α_{con} = 43° for mixture M2). This effect is useful for the avoidance of drop mura of the dotting mura type.

A precise adjustment of the contact angle is a prerequisite for the control of the behaviour of a liquid crystal mixture in the ODF process and has a significant influence in the avoidance of display defects such as ODF mura.

The examples show that it is possible to adjust the contact angle of the mixtures according to the invention by keeping the other relevant parameters sufficiently constant for applications.

## Claims

1. Liquid-crystalline medium, **characterised in that** it comprises one or more compounds selected from the compounds of formula I 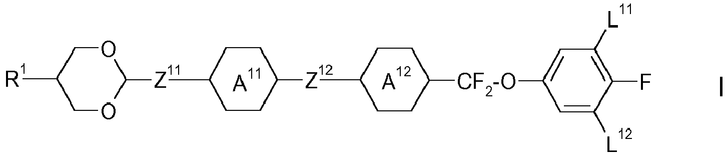 and
a compound of the formula 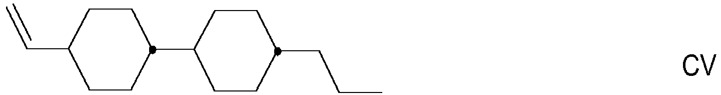 in a concentration of 30 % by weight or less,
and
one or more compounds of formula OT 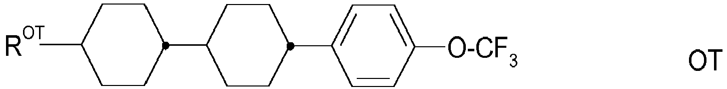 and
a compound of the formula 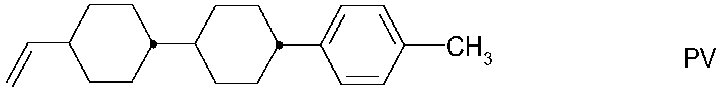 in which
R¹ denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, 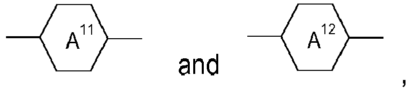 independently of one another, denote 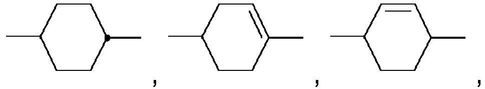 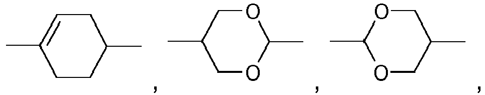 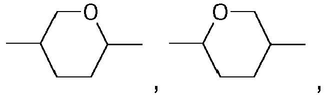 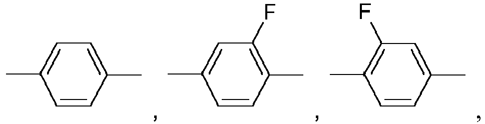 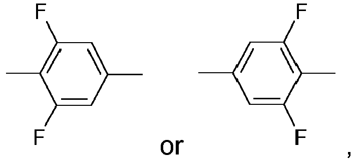
Z¹¹ and Z¹², independently of one another, denote -CH₂CH₂-, -CF₂CF₂-, -COO-, *trans-CH=CH-,* trans-CF=CF-, -C≡C-, -CH₂O-, -CF₂O- or a single bond,
L¹¹ and L¹², independently of one another, denote H, F or Cl,
R^{OT} denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms.

2. Liquid-crystalline medium according to claim 1, **characterised in that** the medium comprises one or more compounds selected from the group of compounds of the formulae IA, IB and IC 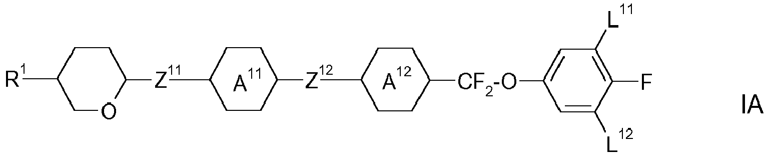 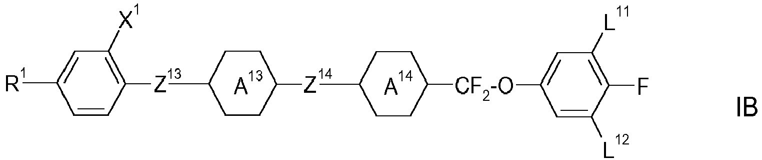 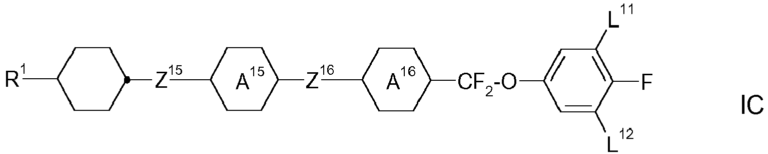 wherein
R¹, A¹¹, A¹², L¹¹, and L¹² have the meanings indicated in claim 1, 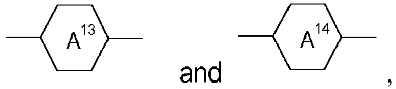 independently of one another, denote 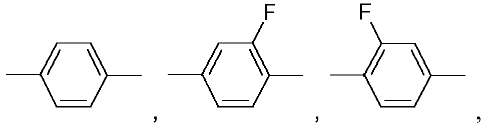 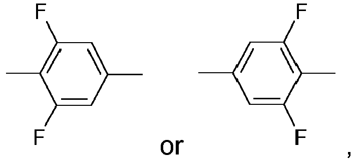 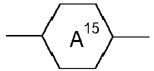 denotes 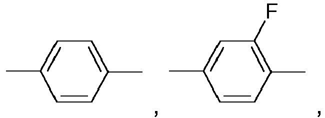 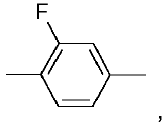 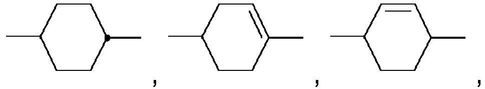 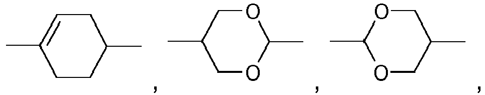 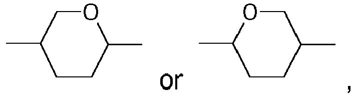 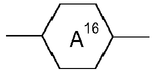 denotes 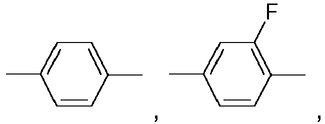 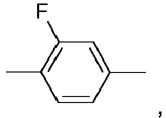 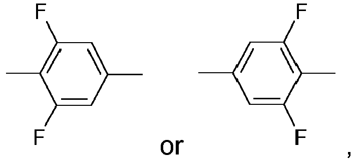
Z¹³ to Z¹⁶, independently of one another, denote -CH₂CH₂-, -CF₂CF₂-, -COO-, *trans-CH=CH-,* trans-CF=CF-, -C≡C-, -CH₂O-, -CF₂O- or a single bond, and
X¹ denotes H or F.

3. Liquid-crystalline medium according to claim 1 or 2, **characterised in that** it comprises one or more compounds selected from the group of compounds of the formulae II and III: 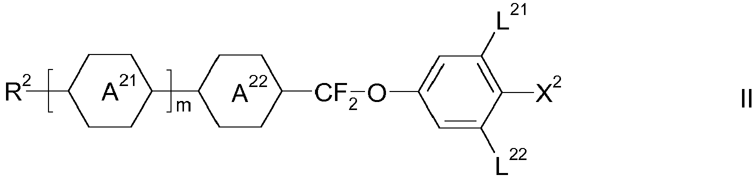 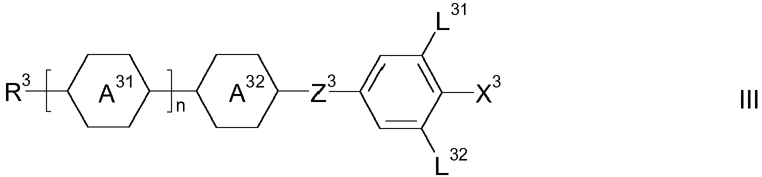 in which
R² and R³, independently of one another, denote alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, 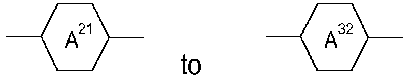 on each occurrence, independently of one another, denote 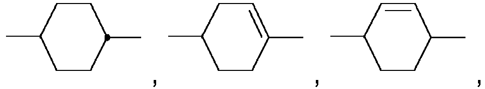 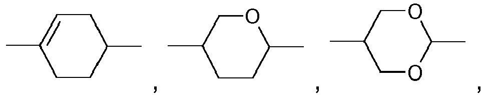 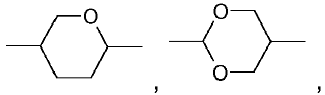 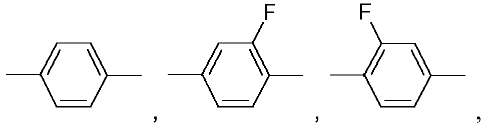 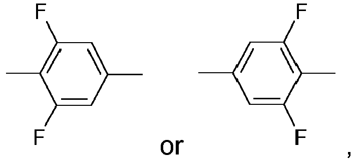
L²¹, L²², L³¹ and L³², independently of one another, denote H or F,
X² and X³, independently of one another, denote halogen, halogenated alkyl or alkoxy having 1 to 3 C atoms or halogenated alkenyl or alkenyloxy having 2 or 3 C atoms,
Z³ denotes -CH₂CH₂-, -CF₂CF₂-, -COO-, *trans*-CH=CH-*,* trans-CF=CF-, -CH₂O- or a single bond, and
m denotes 0,1 or 3 and
n denotes 0,1, 2 or 3,
and, in the case where X² does not denote F, m may also denote 2, and
where the compounds of formula OT of claim 1 are excluded.

4. Medium according to one or more of claims 1 to 3, **characterised in that** it comprises one or more compounds of formula III-2k 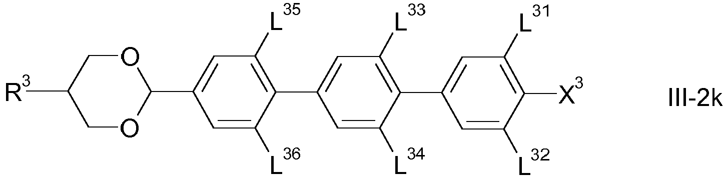 wherein R³, X³ and L³¹ to L³⁶ have the meanings indicated in claim 3.

5. Medium according to one or more of claims 1 to 4, **characterised in that** it comprises one or more compounds of the formula IV 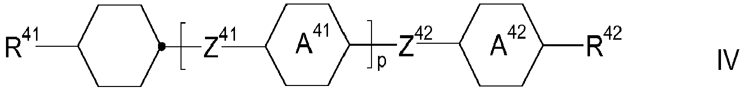 in which
R⁴¹ and R⁴², independently of one another, have the meaning indicated for R² in claim 3, 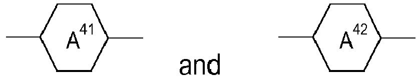 independently of one another and, if 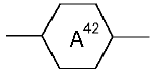 occurs twice, also these independently of one another, denote 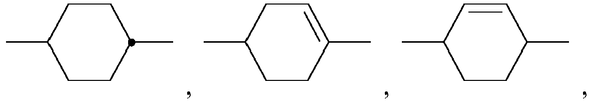 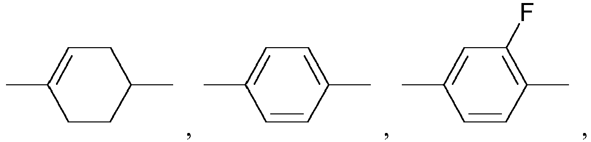 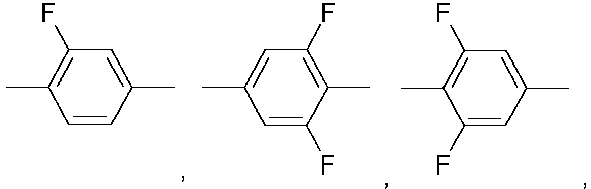 or 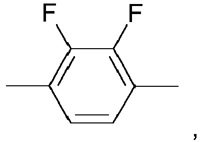
Z⁴¹ and Z⁴², independently of one another and, if Z⁴¹ occurs twice, also these independently of one another, denote -CH₂CH₂-, -COO-, *trans*-CH=CH-, *trans*-CF=CF-, -CH₂O-, -CF₂O-, -C=C- or a single bond, and
p denotes 0, 1 or 2,
and where the compounds CV and CP of claim 1 are excluded.

6. Liquid-crystalline medium according to one or more of claims 1 to 5, **characterised in that** the total concentration of the compounds of the formulae I, IA, IB and IC in the medium is in the range from 10 % to 50 %.

7. Liquid-crystalline medium according to one or more of claims 1 to 6, **characterised in that** it comprises one or more compounds of the formula V 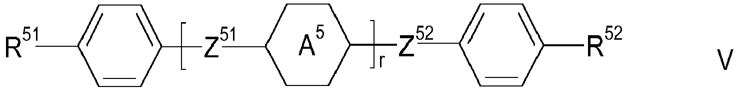 in which
R⁵¹ and R⁵², independently of one another, have the meaning indicated for R² under formula II in claim 2, 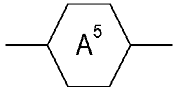 on each occurrence, independently of one another, denotes 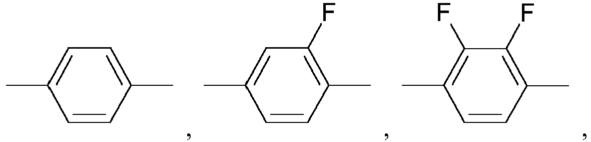 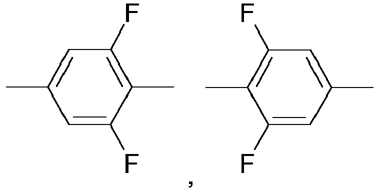 or 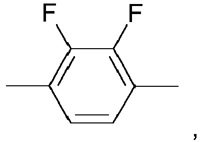
Z⁵¹ and Z⁵², independently of one another and, if Z⁶¹ occurs twice, also these independently of one another, denote -CH₂CH₂-, -COO-, *trans*-CH=CH-*, trans*-CF=CF-, -CH₂O-, -CF₂O- or a single bond, and
r denotes 0, 1 or 2.

8. Liquid crystal medium according to one or more of claims 1 to 7, **characterised in that** the clearing temperature of the medium is 90°C or higher.

9. Process for the fabrication of a liquid crystal display, the process comprising at least the steps: forming a sealant on a first panel; dropping liquid crystal on the first panel to form a plurality of liquid crystal dots; and assembling a second panel with the first panel, wherein the first and the second panels have a plurality of pixel areas, **characterized in that** the liquid crystal is a liquid crystal medium according to one or more of claims 1 to 8.

10. Process according to claim 9, wherein the medium used comprises a compound of the formula PV 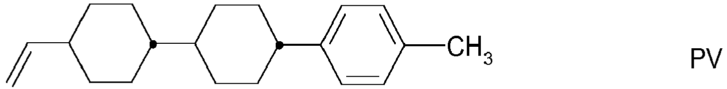 in a concentration of 8 % or more.

11. Process according to claim 9 or 10, wherein the medium used comprises one or more compounds of the formula 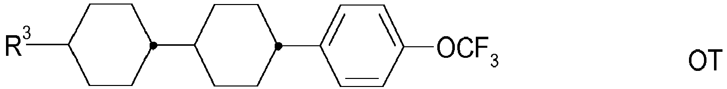 in a total concentration of 6 % or less, and where R³ has the meaning given in claim 1.

12. Process according to claim 9, wherein the medium used comprises one or more compounds of the formula OT 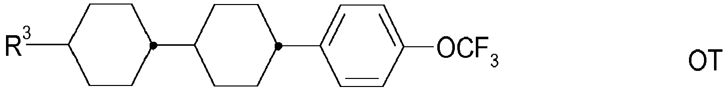 in a total concentration of 4 % or more, where R³ has the meaning given in claim 1
and
a compound of the formula 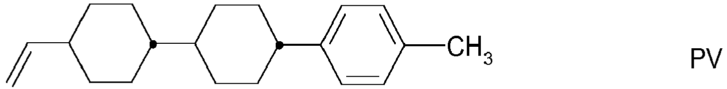 in a concentration of 9 % or less.

13. Liquid crystal display, obtainable by a process according to one or more of claims 9 to 12.

14. Display according to claim 13, wherein the display is addressed by an active matrix.

15. Use of a medium according to one or more of claims 1 to 8 in a liquid-crystal display.
